(19) Europäisches Patentamt
European Patent Office
Office européen des brevets

(11) **EP 3 481 067 A1**

(12) **EUROPEAN PATENT APPLICATION**

(43) Date of publication:
08.05.2019 Bulletin 2019/19

(51) Int Cl.:
***H04N 19/597*** (2014.01)

(21) Application number: **17306538.4**

(22) Date of filing: **07.11.2017**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD**<br><br>(71) Applicant: **THOMSON LICENSING**<br>**92130 Issy les Moulineaux (FR)** | (72) Inventors:<br>• **CHUPEAU, BERTRAND**<br>  **35576 CESSON SEVIGNE CEDEX (FR)**<br>• **GALPIN, FRANCK**<br>  **35576 CESSON SEVIGNE CEDEX (FR)**<br>• **FLEUREAU, JULIEN**<br>  **35576 CESSON SEVIGNE CEDEX (FR)**<br><br>(74) Representative: **Merlet, Hugues et al**<br>**InterDigital CE Patent Holdings**<br>**20, rue Rouget de Lisle**<br>**92130 Issy-les-Moulineaux (FR)** |

(54) **METHOD, APPARATUS AND STREAM FOR ENCODING/DECODING VOLUMETRIC VIDEO**

(57) A method and device for encoding data representative of a 3D representation of a scene into a bitstream, the 3D representation being according to a range of points of view. To reach that aim, at least a depth map associated with at least a part of the 3D representation is generated according to at least one parameter representative of at least a 2D parametrization associated with the at least a part and data associated with at least a point comprised in the at least a part; at least a texture map associated with the at least a part is generated according to the at least a parameter and data associated with the at least a point; a first information representative of variation of quantization parameter within the at least a depth map and/or said at least a texture map is obtained according to a region of interest of the 3D representation; and the at least a depth map is encoded into a first syntax element of the bitstream, the at least a texture map is encoded into a second syntax element of the bitstream, the at least a parameter is encoded into a third syntax element, the first information is encoded into a fourth syntax element and a second information representative of a mapping between the at least a 2D parametrization and corresponding at least a depth map and at least a texture map is encoded into a fifth syntax element.

Corresponding decoding method and device are also disclosed.

**Fig 13**

## Description

### 1. Technical field

The present disclosure relates to the domain of volumetric video content. The present disclosure is also understood in the context of the encoding and/or the formatting of the data representative of the volumetric content, for example for the rendering on end-user devices such as mobile devices or Head-Mounted Displays.

### 2. Background

This section is intended to introduce the reader to various aspects of art, which may be related to various aspects of the present disclosure that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Recently there has been a growth of available large field-of-view content (up to 360°). Such content is potentially n ot fully visible by a user watching the content on immersive display devices such as Head Mounted Displays, smart glasses, PC screens, tablets, smartphones and the like. That means that at a given moment, a user may only be viewing a part of the content. However, a user can typically navigate within the content by various means such as head movement, mouse movement, touch screen, voice and the like. It is typically desirable to encode and decode this content.

Immersive video, also called 360° flat video, allows the user to watch all around himself through rotations of his head around a still point of view. Rotations only allow a 3 Degrees of Freedom (3DoF) experience. Even if 3DoF video is sufficient for a first omnidirectional video experience, for example using a Head-Mounted Display device (HMD), 3DoF video may quickly become frustrating for the viewer who would expect more freedom, for example by experiencing parallax. In addition, 3DoF may also induce dizziness because of a user never only rotates his head but also translates his head in three directions, translations which are not reproduced in 3DoF video experiences.

A large field-of-view content may be, among others, a three-dimension computer graphic imagery scene (3D CGI scene), a point cloud or an immersive video. Many terms might be used to design such immersive videos: Virtual Reality (VR), 360, panoramic, $4\pi$ steradians, immersive, omnidirectional or large field of view for example.

Volumetric video (also known as 6 Degrees of Freedom (6DoF) video) is an alternative to 3DoF video. When watching a 6DoF video, in addition to rotations, the user can also translate his head, and even his body, within the watched content and experience parallax and even volumes. Such videos considerably increase the feeling of immersion and the perception of the scene depth and also prevent from dizziness by providing consistent visual feedback during head translations. The content is created by the means of dedicated sensors allowing the simultaneous recording of color and depth of the scene of interest. The use of rig of color cameras combined with photogrammetry techniques is a common way to perform such a recording.

While 3DoF videos comprise a sequence of images resulting from the un-mapping of texture images (e.g. spherical images encoded according to latitude/longitude projection mapping or equirectangular projection mapping), 6DoF video frames embed information from several points of views. They can be viewed as a temporal series of point clouds resulting from a three-dimension capture. Two kinds of volumetric videos may be considered depending on the viewing conditions. A first one (i.e. complete 6DoF) allows a complete free navigation within the video content whereas a second one (aka. 3DoF+) restricts the user viewing space to a limited volume, allowing limited translation of the head and parallax experience. This second context is a valuable trade-off between free navigation and passive viewing conditions of a seated audience member.

While increasing the user experience in immersive context, the amount of data to be transported to the renderer is very important and may be an issue.

### 3. Summary

References in the specification to "one embodiment", "an embodiment", "an example embodiment", "a particular embodiment" indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The present disclosure relates to a method of encoding data representative of a 3D representation of a scene into a bitstream, the 3D representation being according to a range of points of view, the method comprising:

- generating at least a depth map associated with at least a part of the 3D representation according to at least one parameter representative of at least a two-dimensional parametrization associated with the at least a part and data associated with at least a point comprised in the at least a part, the at least a two-dimensional parametrization being responsive to geometric information associated with the at least a point and to pose information associated with the range of points of view;

- generating at least a texture map associated with the at least a part according to the at least a parameter and data associated with the at least a point comprised in the at least a part;
- obtaining a first information representative of variation of quantization parameter within the at least a depth map and/or the at least a texture map according to a region of interest of the 3D representation;
- encoding the at least a depth map into a first syntax element of the bitstream, the at least a texture map into a second syntax element of the bitstream, the at least a parameter into a third syntax element of the bitstream, the first information into a fourth syntax element of the bitstream and a second information representative of a mapping between the at least a two-dimensional parametrization and corresponding at least a depth map and at least a texture map into a fifth syntax element of the bitstream.

The present disclosure also relates to a device configured to encode data representative of a 3D representation of a scene into a bitstream, the 3D representation being according to a range of points of view, the device comprising a memory associated with at least one processor configured to:

- generate at least a depth map associated with at least a part of the 3D representation according to at least one parameter representative of at least a two-dimensional parametrization associated with the at least a part and data associated with at least a point comprised in the at least a part, the at least a two-dimensional parametrization being responsive to geometric information associated with the at least a point and to pose information associated with the range of points of view;
- generate at least a texture map associated with the at least a part according to the at least a parameter and data associated with the at least a point comprised in the at least a part;
- obtain a first information representative of variation of quantization parameter within the at least a depth map and/or the at least a texture map according to a region of interest of the 3D representation;
- encode the at least a depth map into a first syntax element of the bitstream, the at least a texture map into a second syntax element of the bitstream, the at least a parameter into a third syntax element of the bitstream, the first information into a fourth syntax element of the bitstream and a second information representative of a mapping between the at least a two-dimensional parametrization and corresponding at least a depth map and at least a texture map into a fifth syntax element of the bitstream.

The present disclosure relates to a device configured to encode data representative of a 3D representation of a scene into a bitstream, the 3D representation being according to a range of points of view, the device comprising:

- a generator configured to generate at least a depth map associated with at least a part of the 3D representation according to at least one parameter representative of at least a two-dimensional parametrization associated with the at least a part and data associated with at least a point comprised in the at least a part, the at least a two-dimensional parametrization being responsive to geometric information associated with the at least a point and to pose information associated with the range of points of view;
- a generator configured to generate at least a texture map associated with the at least a part according to the at least a parameter and data associated with the at least a point comprised in the at least a part;
- an interface configured to obtain a first information representative of variation of quantization parameter within the at least a depth map and/or the at least a texture map according to a region of interest of the 3D representation;
- an encoder configured to encode the at least a depth map into a first syntax element of the bitstream, the at least a texture map into a second syntax element of the bitstream, the at least a parameter into a third syntax element of the bitstream, the first information into a fourth syntax element of the bitstream and a second information representative of a mapping between the at least a two-dimensional parametrization and corresponding at least a depth map and at least a texture map into a fifth syntax element of the bitstream.

The present disclosure also relates to a device configured to encode data representative of a 3D representation of a scene into a bitstream, the 3D representation being according to a range of points of view, the device comprising:

- means for generating at least a depth map associated with at least a part of the 3D representation according to at least one parameter representative of at least a two-dimensional parametrization associated with the at least a part and data associated with at least a point comprised in the at least a part, the at least a two-dimensional parametrization being responsive to geometric information associated with the at least a point and to pose information associated with the range of points of view;
- means for generating at least a texture map associated with the at least a part according to the at least a parameter and data associated with the at least a point comprised in the at least a part;
- means for obtaining a first information representative of variation of quantization parameter within the at least a depth map and/or the at least a texture map according to a region of interest of the 3D representation;

- means for encoding the at least a depth map into a first syntax element of the bitstream, the at least a texture map into a second syntax element of the bitstream, the at least a parameter into a third syntax element of the bitstream, the first information into a fourth syntax element of the bitstream and a second information representative of a mapping between the at least a two-dimensional parametrization and corresponding at least a depth map and at least a texture map into a fifth syntax element of the bitstream.

The present disclosure relates to a method of decoding data representative of a 3D representation of a scene from a bitstream, the 3D representation being according to a range of points of view, the method comprising:

- decoding, from the bitstream, at least a parameter representative of at least a two-dimensional parametrization of at least a part of the 3D representation;
- decoding, from the bitstream, data representative of at least a texture map associated with the at least a part of the 3D representation;
- decoding, from the bitstream, data representative of at least a depth map associated with the at least a part of the 3D representation;
- determining data associated with at least a point comprised in the at least a part of the 3D representation from the at least a parameter, the data representative of at least a texture map, the data representative of at least a depth map, a first information obtained from the bitstream and representative of variation of quantization parameter within the at least a depth map and/or the at least a texture map and a second information obtained from the bitstream and representative of a mapping between the at least a two-dimensional parametrization and corresponding at least a depth map and at least a texture map.

The present disclosure relates to a device configured to decode data representative of a 3D representation of a scene from a bitstream, the 3D representation being according to a range of points of view, the device comprising a memory associated with at least one processor configured to:

- decode, from the bitstream, at least a parameter representative of at least a two-dimensional parametrization of at least a part of the 3D representation;
- decode, from the bitstream, data representative of at least a texture map associated with the at least a part of the 3D representation;
- decode, from the bitstream, data representative of at least a depth map associated with the at least a part of the 3D representation;

- determine data associated with at least a point comprised in the at least a part of the 3D representation from the at least a parameter, the data representative of at least a texture map, the data representative of at least a depth map, a first information obtained from the bitstream and representative of variation of quantization parameter within the at least a depth map and/or the at least a texture map and a second information obtained from the bitstream and representative of a mapping between the at least a two-dimensional parametrization and corresponding at least a depth map and at least a texture map.

The present disclosure relates to a device configured to decode data representative of a 3D representation of a scene from a bitstream, the 3D representation being according to a range of points of view, the device comprising:

- a decoder configured to decode, from the bitstream, at least a parameter representative of at least a two-dimensional parametrization of at least a part of the 3D representation;
- a decoder configured to decode, from the bitstream, data representative of at least a texture map associated with the at least a part of the 3D representation;
- a decoder configured to decode, from the bitstream, data representative of at least a depth map associated with the at least a part of the 3D representation;
- a processor configured to determine data associated with at least a point comprised in the at least a part of the 3D representation from the at least a parameter, the data representative of at least a texture map, the data representative of at least a depth map, a first information obtained from the bitstream and representative of variation of quantization parameter within the at least a depth map and/or the at least a texture map and a second information obtained from the bitstream and representative of a mapping between the at least a two-dimensional parametrization and corresponding at least a depth map and at least a texture map.

The present disclosure relates to a device configured to decode data representative of a 3D representation of a scene from a bitstream, the 3D representation being according to a range of points of view, the device comprising:

- means for decoding, from the bitstream, at least a parameter representative of at least a two-dimensional parametrization of at least a part of the 3D representation;
- means for decoding, from the bitstream, data representative of at least a texture map associated with the at least a part of the 3D representation;
- means for decoding, from the bitstream, data representative of at least a depth map associated with the at least a part of the 3D representation;

- means for determining data associated with at least a point comprised in the at least a part of the 3D representation from the at least a parameter, the data representative of at least a texture map, the data representative of at least a depth map, a first information obtained from the bitstream and representative of variation of quantization parameter within the at least a depth map and/or the at least a texture map and a second information obtained from the bitstream and representative of a mapping between the at least a two-dimensional parametrization and corresponding at least a depth map and at least a texture map.

According to a particular characteristic, the at least a depth map and/or said at least a texture map are encoded according to the first information

According to a specific characteristic, the first information corresponds to a prediction error associated with the at least a region of interest.

According to another characteristic, the first information corresponds to an information representative of sampling of the at least a 2D parametrization, a first sampling level being applied to at least an area of the 2D parametrization associated with the at least a region of interest and a second sampling level being applied to other areas of the 2D parametrization.

The present disclosure also relates to a bitstream carrying data representative of a 3D representation of a scene, the 3D representation being according to a range of points of view, wherein the data comprises:

- at least a parameter representative of at least a two-dimensional parametrization of at least a part of part of the 3D representation, the parameters being obtained according to geometric information associated with at least a point of the at least a part and according to pose information associated with the range of points of view;
- data representative of at least a texture map associated with the at least a part and determined from the at least a parameter and data associated with the at least a point comprised in the at least a part;
- data representative of at least a depth map associated with the at least a part of the 3D representation and determined from the at least a parameter and data associated with the at least a point comprised in the at least a part;
- a first information representative of variation of quantization parameter within the at least a depth map and/or the at least a texture map according to a region of interest of the 3D representation; and
- a second information representative of a mapping between the at least a two-dimensional parametrization and corresponding at least a depth map and at least a texture map.

The present disclosure also relates to a computer program product comprising program code instructions to execute the steps of the method of encoding or decoding data representative of a 3D representation of a scene, when this program is executed on a computer.

The present disclosure also relates to a (non-transitory) processor readable medium having stored therein instructions for causing a processor to perform at least the abovementioned method of encoding or decoding data representative of a 3D representation of a scene.

## 4. List of figures

The present disclosure will be better understood, and other specific features and advantages will emerge upon reading the following description, the description making reference to the annexed drawings wherein:

- figure 1 shows a volumetric content, according to a particular embodiment of the present principles;
- figures 2A and 2B show a lightfield acquisition device configured to acquire images of a 3D scene [or of a part of the 3D scene] for obtaining at least a part of the volumetric content of figure 1, according to a particular embodiment of the present principles;
- figure 3 shows representations of the 3D scene, or part of it, acquired with the acquisition device of figures 2A and 2B, according to a particular embodiment of the present principles;
- figure 4 shows 2D parametrizations associated with 3D parts of the representation of the 3D scene of figure 3, according to a particular embodiment of the present principles;
- figures 5 and 6 show patch atlas associated with the 3D parts of figure 4, according to particular embodiments of the present principles;
- figure 7 shows the generation of the patch atlas of figures 5 and 6, according to a non-limiting embodiment of the present principles;
- figures 8A, 8B, 8C and 8D each shows a non-limiting example of the partitioning of the 3D representation of the 3D scene of figure 3;
- figures 9 and 10 show the adapting of the sampling of a 2D parametrization associated with a 3D part of figure 4, according to a non-limiting embodiment of the present principles;
- figure 11 shows a first scheme for encoding/decoding the 3D scene of figure 3, according to a first non-restricting embodiment of the present principles;
- figure 12 shows a second scheme for encoding/decoding the 3D scene of figure 3, according to a second non-restricting embodiment of the present principles;
- figure 13 shows a third scheme for encoding/decoding the 3D scene of figure 3, according to a third non-restricting embodiment of the present principles;

- figure 14 shows an example of an architecture of a device configured for implementing the method(s) of figure 19 and/or figure 20, in accordance with an example of the present principles;
- figure 15 shows two remote devices of figure 16 communicating over a communication network, in accordance with an example of the present principles;
- figure 16 shows the syntax of a signal carrying a description of the 3D representation of the 3D scene of figure 3, in accordance with an example of the present principles;
- figure 17 shows a method of encoding data representative of a 3D representation of the 3D scene of figure 3, in accordance with an example of the present principles;
- figure 18 shows a method of decoding data representative of a 3D representation of the 3D scene of figure 3, in accordance with an example of the present principles.

## 5. Detailed description of embodiments

The subject matter is now described with reference to the drawings, wherein like reference numerals are used to refer to like elements throughout. In the following description, for purposes of explanation, numerous specific details are set forth in order to provide a thorough understanding of the subject matter. It can be evident, however, that subject matter embodiments can be practiced without these specific details.

The present description illustrates the principles of the present disclosure. It will thus be appreciated that those skilled in the art will be able to devise various arrangements that, although not explicitly described or shown herein, embody the principles of the disclosure.

According to non-limitative embodiments of the present disclosure, methods and devices to encode images of a volumetric video (also called 3DoF+ or 6DoF video) into a bitstream are disclosed. Methods and devices to decode images of a volumetric video from a bitstream are also disclosed. Examples of the syntax of a bitstream for the encoding of one or more images of a volumetric video are also disclosed.

According to a first aspect, the present principles will be described in reference to a first particular embodiment of a method of (and a device configured for) encoding data representative of a 3D representation of a scene (represented with an omnidirectional content, also called immersive video) into a bitstream. To reach that aim, one or more 2D parametrizations are obtained for the 3D representation, a 2D parametrization corresponding for example to a 2D pixel representation of the 3D representation or of a part of the 3D representation of the scene. A depth map (also called height map) and a texture map (also called color map) are determined for and associated with each part of the 3D representation using the one or more parameters describing the 2D parametrization associated with each part. The depth map associated with the 3D representation (or with a part of the 3D representation) comprises depth or distance information associated with the elements (e.g. points) comprised in the 3D representation (respectively in the part of the 3D representation). The texture map associated with the 3D representation (or with a part of the 3D representation) comprises texture information (e.g. RGB values) associated with the elements (e.g. points) comprised in the 3D representation (respectively in the part of the 3D representation). The quantization step used to encode the depth and/or texture information may vary within the depth map and/or texture map depending on whether the part of the 3D representation associated with the depth map and/or texture map comprises a region of interest. A bitstream may be generated by combining and/or coding the parameters of the 2D parametrization(s), the data representative of the depth map(s), the data representative of the texture map(s), the information regarding the variation of the quantization step(s) and mapping information that links each 2D parametrization with its associated depth map and texture map.

On the decoder/rendered side, the 3D representation (e.g. a point cloud or a mesh) may be reconstructed by decoding/extracting from the stream the parameters of the 2D parametrizations and associated depth and texture maps with the information related to the variation of the quantization step and one or more images of the 3D scene may be rendered from the 3D representation.

The use of a plurality of 2D parametrizations as references for representing the object with texture and depth information enables to reduce the amount of data needed for representing the scene in comparison to a representation with a point cloud or a 3D mesh while enabling to represent objects with complex topologies with an optimal level of details. Varying the quantization step according to the presence of region(s) of interest further enables to reduce the amount of data to be transmitted while keeping a good representation of the region(s) of interest.

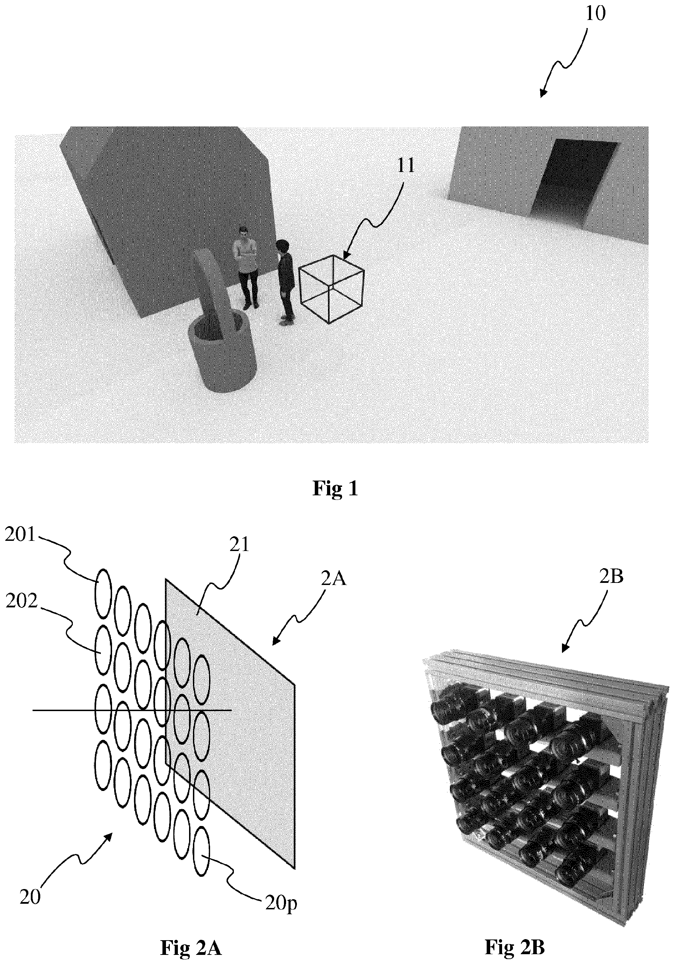

**Figure 1** shows an example of a volumetric content 10 (also called immersive content or omnidirectional content), according to a particular and non-limitative embodiment of the present principles. Figure 1 shows an image representing a three-dimension scene comprising a surface representation of several objects. The scene may have been captured using any suitable technology. For example, it may have been created using computer graphics imagery (CGI) tools. It may have been captured by color image and depth image acquisition devices. In such a case, it is possible that part of the objects that are not visible from the acquisition devices (e.g. cameras) may not be represented in the scene. The example scene illustrated in figure 1 comprises houses, two characters and a well. Cube 11 on figure 1 illustrates a space of view from which a user is likely to observe the 3D scene from.

The display device used to visualize the volumetric content 10 is for example a HMD (Head-Mounted Display), worn on the head of a user or as part of a helmet. The HMD advantageously comprises one or more display screens (for example LCD (Liquid Crystal Display), OLED (Organic Light-Emitting Diode) or LCOS (Liquid Crystal on Silicon)) and sensor(s) configured for measuring the change(s) of position of the HMD, for example gyroscopes or an IMU (Inertial Measurement Unit), according to one, two or three axes of the real world (pitch, yaw and/or roll axis). The part of the volumetric content 10 corresponding to the measured position of the HMD is advantageously determined with a specific function establishing the relationship between the point of view associated with the HMD in the real world and the point of view of a virtual camera associated with the volumetric content 10. Controlling the part of the video content to be displayed on the display screen(s) of the HMD according to the measured position of the HMD enables a user wearing the HMD to browse into the immersive content, which is larger than the field of view associated with the display screen(s) of the HMD. For example, if the field of view offered by the HMD is equal to 110° (for ex ample about the yaw axis) and if the immersive content offers a content of 180°, the user wearing the HMD may rotate his/her head to the right or to the left to see the parts of the video content outside the field of view offered by the HMD. According to another example, the immersive system is a CAVE (Cave Automatic Virtual Environment) system, wherein the immersive content is projected onto the walls of a room. The walls of the CAVE are for example made up of rear-projection screens or flat panel displays. The user may thus browse his/her gaze on the different walls of the room. The CAVE system is advantageously provided with cameras acquiring images of the user to determine by video processing of these images the gaze direction of the user. According to a variant, the gaze or the pose of the user is determined with a tracking system, for example an infrared tracking system, the user wearing infrared sensors. According to another variant, the immersive system is a tablet with a tactile display screen, the user browsing into the content by scrolling the content with one or more fingers sliding onto the tactile display screen.

The volumetric content 10 may for example be a $2\pi$, $2.5\,\pi$, $3\pi$ or $4\pi$ steradian content.

**Figures 2A and 2B** show an example of a lightfield acquisition device that may be used to acquire the volumetric content 10. More specifically, figure 2A and 2B each show a camera array 2A, 2B (also called camera arrays), according to two particular embodiments of the present principles.

The camera array 2A comprises an array 20 of lenses or micro-lenses comprising several micro-lenses 201, 202 to 20p with p being an integer corresponding to the number of micro-lenses, and one or several sensor arrays 21. The camera array 2A does not include a main lens. The array of lenses 20 may be a small device, which is commonly named a micro-lens array. The camera array with a single sensor can be considered as a special case of plenoptic camera where the main lens has an infinite focal length. According to a particular arrangement wherein the number of photosensors is equal to the number of micro-lenses, i.e. one photosensor is optically associated with one micro-lens, the camera array 20 may be seen as an arrangement of a plurality of individual cameras (for example micro-cameras) closely spaced, such as a square arrangement (as illustrated in figure 2A) or a quincunx arrangement for example, or non-flat arrangement for example on a cylindrical surface.

The camera array 2B corresponds to a rig of individual cameras each comprising a lens and a photosensor array. The cameras are spaced apart by, for example, a distance equal to a few centimetres or less or 5, 7 or 10 cm.

The lightfield data (forming a so-called lightfield image) obtained with such a camera array 2A or 2B corresponds to the plurality of views of the scene, i.e. to the final views that may be obtained by demultiplexing and demosaicing a raw image obtained with a plenoptic camera such as the plenoptic camera of the type 1.0, corresponding to a plenoptic camera wherein the distance between the lenslet array and the photosensor array is equal to the microlenses focal length, or of the type 2.0 otherwise (also called focused plenoptic camera). The cameras of the camera array 2B are calibrated according to any known method, i.e. intrinsic and extrinsic parameters of the cameras are known.

The different views obtained with the lightfield acquisition device enable to obtain an immersive content or at least a part of the immersive content with use of algorithms able to compute depth for example based on disparity. Naturally, the immersive content may be obtained with acquisition device different from a lightfield acquisition device, for example with a camera associated with a depth sensor (e.g. an infra-red emitter/receiver such as the Kinect of Microsoft or with a laser emitter).

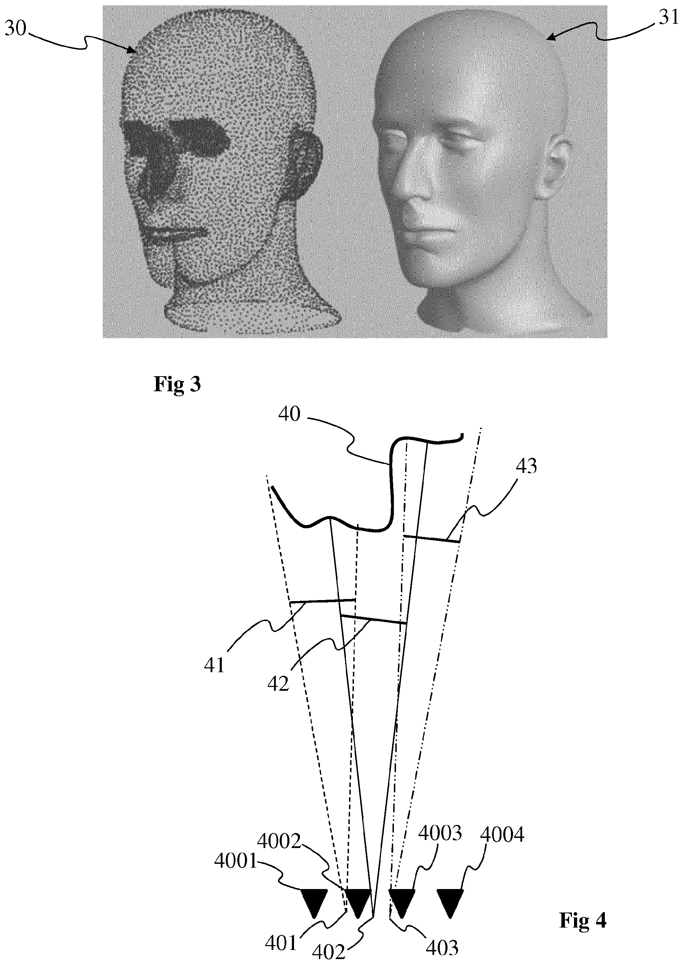

**Figure 3** shows two different representations of an object, or part of it, of the scene represented with the volumetric content 10. According to the example of figure 3, the object is a person, for example moving within the scene, and a part of the object corresponding to the head is illustrated in figure 3.

A first 3D representation 30 of the part of the object is a point cloud. The point cloud corresponds to a large collection of points representing the object, e.g. the external surface or the external shape of the object. A point cloud may be seen as a vector based structure, wherein each point has its coordinates (e.g. three-dimensional coordinates XYZ, or a depth/distance from a given point of view) and one or more attributes, also called component. An example of component is the color component that may be expressed in different color spaces, for example RGB (Red, Green and Blue) or YUV (Y being the luma component and UV two chrominance components). The point cloud is a representation of the object as seen from a given point of view, or a range of point of views. The point cloud may be obtained of different ways, e.g.:

- from a capture of a real object shot by a rig of cameras, as the camera arrays of figure 2, optionally complemented by depth active sensing device;
- from a capture of a virtual/synthetic object shot by a rig of virtual cameras in a modelling tool;
- from a mix of both real and virtual objects.

According to a variant, the 3D representation corresponds to a 3D mesh representation and the points illustrated on the first representation corresponds to the vertices of the mesh elements (e.g. triangles) forming the mesh.

In the first case (from the capture of a real object), the set of cameras generates a set of images or sequences of images (videos) corresponding to the different views (different points of view). The depth information - meaning the distance from each camera center to the object surface - is obtained either by means of active depth sensing device, e.g., in infrared range and based on structured light analysis or time of flight, or based on disparity algorithms. In both cases, all cameras need to be calibrated, intrinsically and extrinsically. The disparity algorithms consist on a search of similar visual features on a pair of rectified camera images, typically to be made along a 1-dimension line: the larger the pixel column difference, the closer the surface of this feature. In the case of a camera array, the global depth information may be obtained from the combining of a plurality of peer disparity information, taking benefit of the plurality of camera pairs, therefore improving the signal over noise ratio.

In the second case (synthetic object), the modelling tool provides directly the depth information.

A second representation 31 of the part of the object may be obtained from the point cloud (or the 3D mesh) representation 30, the second representation corresponding to a surface representation. The point cloud may be processed in order to compute its surface. For that purpose, for a given point of the point cloud, the neighboring points of this given point are used in order to compute the normal to the local surface at this given point, the surface element associated with this given point being derived from the normal. The process is reiterated for all points to obtain the surface. Methods for reconstructing the surface from a point cloud are for example described by Matthew Berger et al. in "State of the Art in Surface Reconstruction from Point Clouds", State of the Art Report, 2014. According to a variant, the surface element associated with a given point of the point cloud is obtained by applying splat rendering to this given point. The surface of the object (also called implicit surface or external surface of the object) is obtained by blending all the splats (e.g., ellipsoids) associated with the points of the point cloud.

In a particular embodiment, the point cloud represents only partial views of the object, and not the object in its totality, and this corresponds to the way how the object is supposed to be watched at the rendering side, for example in a cinematographic scene. For example, the shooting of a character facing a flat camera array generates a point cloud on the side of the rig only. The back of the character does not even exist, the object is not closed on itself, and the geometric characteristics of this object is therefore the set of all the surfaces oriented in the direction of the rig (the angle between the normal of each local surface and the ray back to the acquisition device is for example less than 90°).

**Figure 4** shows 2D parametrizations 41, 42 and 43 associated with 3D parts of the representation 40 of the object of the scene that has been acquired with the cameras 4001, 4002, 4003 and 4004, according to a particular embodiment of the present principles. The cameras 4001 to 4004 correspond for example to some of the cameras of the rig of figure 2B. The object is represented with its surface 40 as in the example 31 of figure 3 but may be represented with the point cloud itself as in the example 30 of figure 3. Each 2D parametrization is associated with a 3D part of the representation of the object, each 3D part corresponding to a volume comprising one or more points of the point cloud. Each 2D parametrization is determined by taking into account pose information of the acquisition device in a way as to browse a maximum number of points (generated by the range of points of view of the acquisition device) of the point cloud comprised in the 3D part associated with said each 2D parametrization. When the 2D parametrization is obtained with a linear perspective projection of the points of the associated 3D part, a determined point of view is associated with each 2D parametrization, each point of view being comprised within a range of points of view that corresponds to the range of points of view used for acquiring the scene. The 2D parametrization 41 is associated with the point of view 401, the 2D parametrization 42 is associated with the point of view 402 and the 2D parametrization 43 is associated with the point of view 403. As can be seen on figure 4, each of the points of view 401 to 403 is located between the points of view 4001 and 4002 corresponding to respectively the left limit 4001 and the right limit 4004 of the range of points of view of the acquisition device. The point cloud is obtained from a limited and determined range of points of view and the 2D representations (i.e. the 2D parametrizations) of the 3D parts of the point cloud are all seen from a point of view that is located within the limited and determined range of points of view used to obtain the point cloud. Each 2D parametrization is a 2D representation of the 3D part of the point cloud it is associated with. A same 3D part may be represented with one or several 2D parametrizations, e.g. with 2, 3 or more 2D parametrization. As discussed hereinabove, a 2D parametrization associated with one given 3D part of the point cloud corresponds to a browsing in 2 dimensions of the given 3D part of the point cloud allowing to sample the given 3D part, i.e. a 2D representation of the content (i.e. the point(s)) of this given 3D part comprising a plurality of samples, the number of which depending from the sampling rate that is applied. A 2D parametrization may be obtained in diverse ways, for example by implementing any one of the following methods:

- linear perspective projection of the points of the 3D part of the point cloud onto a plane associated with a point of view, the parameters representative of the linear perspective projection comprising the location of the virtual camera, the spatial sampling rate and the field of view in the 2 dimensions;
- orthographic projection of the points of the 3D part of the point cloud onto a surface, the parameters representative of the orthographic projection comprising the geometry (shape, size and orientation) of the projecting surface and spatial sampling rate;
- LLE (Locally-Linear Embedding) that corresponds to a mathematical operation of dimension reduction, here applied to convert/transform from 3D to 2D, the parameters representative of the LLE comprising the transformation coefficients.

The 2D parametrizations 41, 42 and 43 may be represented with a limited number of parameters and defined for example with one or more parametric equations. The 2D parametrization associated with a given 3D part of the point cloud is determined by taking into account the geometric characteristic of the given 3D part (e.g. extreme points of the given 3D part and/or normal information associated with elements of the external surface of the part of the object comprised in the given 3D part that is obtained from the points located within the 3D part) and the pose information of the acquisition device(s) (e.g. for orienting the 2D parametrization). Considering the geometric characteristic of the 3D part and the pose information enables to obtain a 2D parametrization located in the space facing the 3D part, i.e. a 2D parametrization located between the acquisition devices and the point cloud.

As can be seen on figure 4, the 2D parametrizations 41, 42 and 43 may overlap each other, the overlapping being for example due to the overlapping of the 3D parts the 2D parametrizations are associated with.

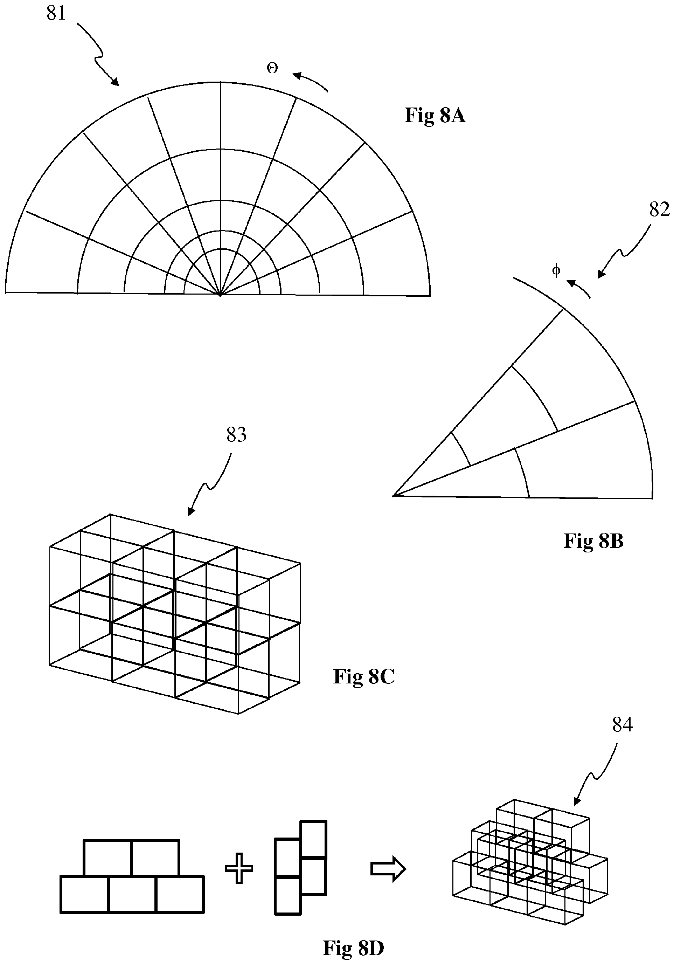

To obtain the 3D parts, the point cloud may be partitioned according to different methods. For example, the point cloud may be partitioned according to the examples of **figures 8A to 8D.** According to the non-limiting example of figure 8A, the 3D space 81 (e.g. a half-sphere) occupied by the point cloud is partitioned according to spherical coordinates (r, θ, φ), i.e. according to a distance 'r' corresponding to the radius of the half-sphere and to the angles 'θ' and 'φ', each dimension 'r', 'θ' and 'φ' being partitioned evenly. According to a variant, one or more of the dimensions 'r', 'θ' and/or 'φ' may vary, for example the depth of the 3D parts may vary with the dimension 'r'. According to a variant, the size of each 3D part is determined to uniformly distribute the points of the point cloud into the 3D parts, the size of the 3D points depending from the local density of the points in the different areas of the space occupied by the point cloud. In the example of figure 8B, the 3D space 82 (e.g. a half-sphere) occupied by the point cloud is partitioned according to spherical coordinates (r, θ, φ) in a staggered way. In the examples of figures 8A and 8B, the 3D parts may be seen as view camera frustum volumes. According to the non-limiting example of figure 8C, the 3D space 83 (e.g. a parallelepiped corresponding to a box bounding the point cloud) occupied by the point cloud is partitioned according to Cartesian coordinates (x, y, z), i.e. according to the 3 dimensions of a 3D Cartesian frame of reference. Each 3D part may have the form of a cube or of a rectangle parallelepiped. Each 3D part may have the same size, or the 3D parts may be of different size, for example to uniformly distribute the points into all 3D parts. Figure 8D shows a variant of the partitioning of figure 8C wherein the parallelepipeds are distributed in a staggered way within the 3D space 84 occupied by the point cloud. Even if not illustrated on figures 8A, 8B, 8C and 8D, the 3D parts resulting from the partitioning of the point cloud may overlap each other in part, meaning that some parts of the space of the point cloud may belong to several 3D parts. The partitioning of the point cloud may be fixed or may vary over the time. For example, the partitioning of the point cloud may vary from a GOP (Group of Pictures) to another GOP. When applied in the context of MPEG-DASH (Dynamic Adaptive Streaming over HTTP), the partitioning may vary from a segment to another segment, and in the frame of a ISOBMFF standard, this segment may be an ISOBMFF segment.

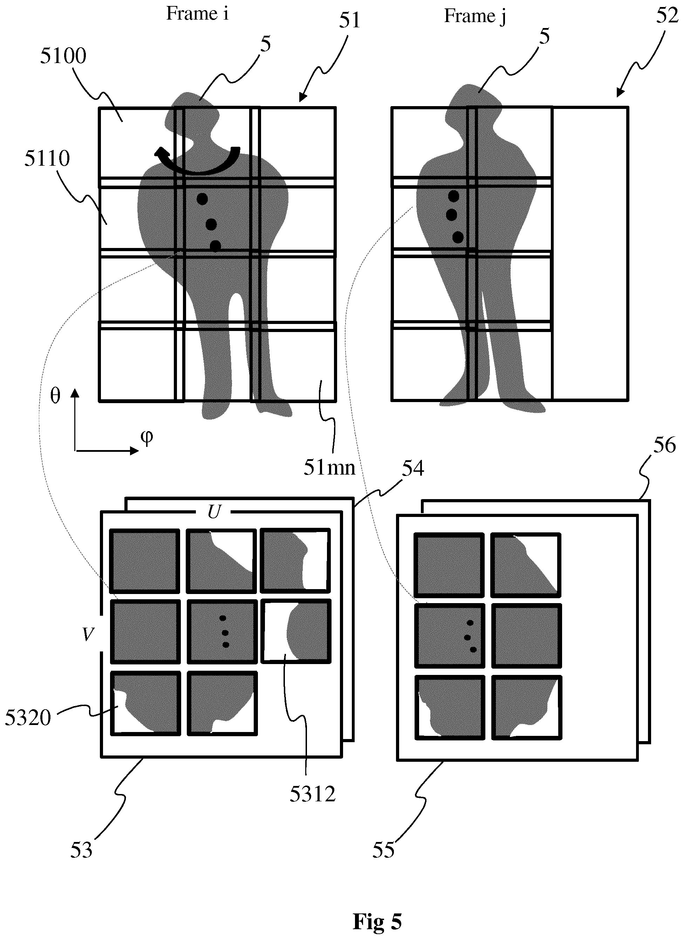

**Figure 5** shows the association of depth maps and texture maps with the 3D parts of the point cloud for a frame i and for a frame j located temporally after the frame i, according to a non-limiting example of the present principles. The 3D point cloud representing the object 5 (a person in the example of figure 5) is illustrated in shades of grey. The partitioning 51 of the object 5 corresponds to the example of figure 8A, i.e. a partitioning according to spherical coordinates, with partial overlap between neighboring 3D parts. For sake of clarity, the point cloud and its partitioning are represented in 2D, according to θ and φ only. The 3D parts resulting from the partitioning are illustrated with squares 5100, 5110, 51 mn arranged in a matrix fashion, wherein 'm' corresponds to the row index and 'n' corresponds to the column index. For example, the reference number 5100 points to the square belonging to the row with index '0' and to the column with index '1' and the reference number 5110 points to the square belonging to the row with index '1' and to the column with index '0'. One depth map is associated with each 3D part of the point cloud 5. In a same way, one texture map is associated with each 3D part of the point cloud 5.

A depth map associated with a given 3D part, for example the 3D part 5110, is obtained by using the parameters of the 2D parametrization associated with the given 3D part 5110 and the depth map 5320 is obtained by using the parameters of the 2D parametrization associated with the 3D part 5320. For example, when the 2D parametrization corresponds to a linear perspective projection, the parameters representative of the 2D parametrization are the location of the point of view (i.e. the virtual camera location) (that may be for example obtained from the normal associated with the points of the point cloud comprised in the 3D part) and the horizontal and vertical field of view. Depth information to be stored in the depth map corresponds to the distances between the virtual camera location in the case of linear perspective or the 2D projection surface in the case of orthographic projection and the points of the point cloud comprised in the 3D part along rays starting from the point of view in the case of linear perspective or orthogonal to the projection surface in the case of orthographic projection and ending at the points of the point cloud comprised in the 3D part, knowing the coordinates of the points and the coordinates of the point of view (in the case of a linear perspective projection) in world space for example. When the object is represented with its implicit surface obtained from the points of the point cloud, the distances to be stored in the depth map correspond to the distances between the intersections between the rays and the 2D parametrization surface on one hand and the intersections between the rays and the implicit surface on the other hand. The number of depth information may depend on the resolution of the 2D parametrization surface that depends from the sampling interval. A depth map is for example obtained by applying the splat rendering technique, i.e. the depth value associated with a point is assigned to the sample of the 2D parametrization surface associated with this point (this sample depending from the type of 2D parametrization that is used, e.g., linear perspective projection, orthographic projection or LLE) and also to the samples located in the neighborhood of the crossed sample (these samples forming a splat). According to a variant, the depth map is obtained by applying ray tracing technique, i.e. by launching rays from the samples of the 2D parametrization surface and by assigning to a given sample the depth value that corresponds to the depth value associated with the point that is intersected by the ray launched from this given sample (or the point the closest to the ray).

The coding of depth information may vary from a depth map to another one in the first patch atlas 53. For example, the coding of depth information for a given depth map may be adapted to the range of depth values for the 3D part associated with the given depth map and/or to the number of points comprised in the 3D part. For example, depending on the minimal depth value and maximal depth value computed for the 3D part, the coding of the depth information in the corresponding depth map is determined to be adapted to the difference between these minimal and maximal values. If the difference is small, the depth information may for example be coded on 8 or 10 bits and if the difference is great, the depth information may for example be coded on 12, 14 or more bits. Varying the coding from a depth map to another one enables to optimize the bit rate coding. According to a variant, the depth information is coded on a same bit depth (e.g. 8, 10, 12 or 14 bits) for each 3D map, whatever the difference between the minimal and maximal depth value, but by considering the minimal and maximal values. Such a variant enables decreasing the quantization step when the difference is small which enables to decrease the quantization noise associated with the coding of the depth information.

In a same way, a texture map associated with the given 3D part is obtained by using the parameters of the 2D parametrization associated with the given 3D part. Color information retrieved from the points of the point cloud comprised in the given 3D part or color information retrieved from the implicit surface of the object intersected by the rays casted from the point of view is associated with the samples of the 2D parametrization surface to form the color map. As for the depth maps, a color map is for example obtained by applying the splat rendering technique, i.e. the color value(s) associated with a point is assigned to the sample of the 2D parametrization surface associated with this point (this sample depending from the type of 2D parametrization that is used, e.g., linear perspective projection, orthographic projection or LLE) and also to the samples located in the neighborhood of the crossed sample (these samples forming a splat). According to a variant, the texture map is obtained by applying ray tracing technique, i.e. by launching rays from the samples of the 2D parametrization surface and by assigning to a given sample the color value that corresponds to the color value associated with the point that is intersected by the ray launched from this given sample (or the point the closest to the ray). As for the depth information, the coding of color information for a given color map may be adapted to the range of color values for the 3D part associated with the given color map and/or to the number of points comprised in the 3D part. For example, depending on the minimal color value and maximal color value computed for the 3D part, the coding of the color information in the corresponding color map is determined to be adapted to the difference between these minimal and maximal values. If the difference is small, the texture/color information may for example be coded on 8 or 10 bits and if the difference is great, the texture/color information may for example be coded on 12, 14 or more bits. Varying the coding from a color map to another one enables to optimize the bit rate coding. According to a variant, the color information is coded on a same bit depth (e.g. 8, 10, 12 or 14 bits) for each texture map, whatever the difference between the minimal and maximal color value, but by considering the minimal and maximal values. Such a variant enables to decrease the quantization step when the difference is small which enables to a higher color dynamic range or higher luminance range, which may be used to obtain a HDR (High Dynamic Range) representation of the object represented with the point cloud.

The set of obtained depth maps may be arranged in a first patch atlas 53 according to a determined or random arrangement, for example in a matrix fashion with rows and columns, wherein a patch of the first patch atlas 53 corresponds to one depth map. For example, the patch 531 is the depth map associated with the 3D part 5110.

In a same way, the set of obtained texture maps are arranged in a second patch atlas 54, for example according to a same arrangement as the depth maps in the first patch atlas 53.

A first mapping information may be generated to keep the connection between a 2D parametrization and the associated depth map and texture map in respectively the first and second patch atlas. The first mapping information may for example be of the form of:

> {parameters of the 2D parametrization; depth map ID; texture map ID}

wherein the depth map ID may be an integer value or a pair of values comprising the column index U and the row index V the depth map belongs to in the matrix of patches of the first patch atlas; the texture map ID may be an integer value or a pair of values comprising the column index U' and the row index V' the texture map belongs to in the matrix of patches of the second patch atlas.

When the depth maps and the texture maps are arranged according to a same arrangement in the first patch atlas and the second patch atlas, the depth map ID and the texture map ID are the same and the first mapping information may be for example of the form of:

> {parameters of the 2D parametrization; depth and texture maps ID}

wherein 'depth and texture maps ID' identifies both depth map in the first patch atlas and the color map in the second map atlas, either via a same integer value associated with both depth and texture maps or via the pair of values column index U and row index V the depth and texture maps belong in respectively the first patch atlas and the second patch atlas.

The same mapping information is generated for each 2D parametrization and associated depth and texture maps. Such a first mapping information enables to reconstruct the point cloud by establishing the association of the 2D parametrization with corresponding depth and texture maps. If the 2D parametrization is a projection, the point cloud may be reconstructed by de-projecting (performing the inverse projection) the depth information comprised in the associated depth map and the texture/color information in the associated texture map. The first mapping information then corresponds to a list of mapping information:

> {parameters of the 2D parametrization; depth and texture maps ID}i,

For i = 1 to n, with n the number of 2D parametrizations.

The first patch atlas 53 and the second patch atlas may be seen as images with same resolution, i.e. with a same number of pixels arranged in a matrix fashion with K columns and L rows, K and L being integer. Each patch (corresponding to either a depth map for the first patch atlas 53 or to a texture map for the second patch atlas 54) comprises a subset of pixels of the image representing either the first patch atlas 53 or the second patch atlas.

According to an optional variant, a second mapping information may be associated with the pixels of the images representing either the first patch atlas 53 or the second patch atlas 54, the second mapping information being advantageously common to the image representing the first patch atlas 53 and to the image representing the second patch atlas 54, the resolution being the same for both images and the patches referring to a same 2D parametrization being organized according to a same arrangement in both first and second patch atlas. The second mapping information indicates to which 2D parametrization each pixel or each group of pixels of the image representing the first patch atlas (or the second patch atlas) refers to or is associated with. To reach that aim, an identification information is associated with each 2D parametrization (for example an integer value different for each 2D parametrization). The second mapping information may for example be of the form a map of cells arranged in rows and columns, each cell corresponding to a pixel or to a group of pixels of the image and comprising the identification information of the corresponding 2D parametrization. According to another example, the second mapping information corresponds to a list, for example of the following form:

> {3D part Identification; pixel/group of pixels identification}, for each pixel or each group of pixels of the image representing the first/second patch atlas. The second mapping information enables to speed up the decoding of the information at decoder/rendered side by easing the retrieving of the identification information associated with each 3D part, which should occur for each pixel of the image. Typical implementation of the decoder requires the parallel implementation of this retrieving for each pixel of the image on a GPU (Graphical Processing Unit) which has to avoid browsing a list. According to this optional variant, this second mapping information is an image typically with lower resolution than the color and depth image where each pixel gives directly the identification information associated with each 3D part the pixel/point belongs to.

The partitioning of the object 5 may vary over time, for example from a GOP to another following GOP, or when a change in the topology of the object 5 has been changed or every q frames, with q an integer greater than or equal to 1. Such a variation in the partitioning is illustrated in Figure 5 with the frame j. The partitioning 52 of the object 5 at frame j is different from the partitioning 51 of the same object 5 at frame i. In the example of figure 5, the topology of the object 5 at frame j is different from the topology of the object 5 at frame i. Frame j may for example belongs to a GOP that temporally follows the GOP comprising the frame i. A first patch atlas 55, comprising depth maps associated with the 3D parts and corresponding 2D parametrizations, is obtained using the parameters representative of the 2D parametrizations associated with the 3D parts resulting from the partitioning and from the data representative of the geometry (e.g. coordinates) of the points comprised in the 3D parts, as described with regard to frame i. As the number of 3D parts resulting from the partitioning 52 is less than the number of 3D parts resulting from the partitioning 51, the number of depth maps in the first patch atlas 55 is less than the number of depth maps comprised in the first patch atlas 53. In a same way, a second patch atlas 56, comprising texture maps associated with the 3D parts and corresponding 2D parametrizations, is obtained using the parameters representative of the 2D parametrizations associated with the 3D parts resulting from the partitioning 52 and from the data representative of the geometry (e.g. coordinates) of the points comprised in the 3D parts, as described with regard to frame i. As the number of 3D parts resulting from the partitioning 52 is less than the number of 3D parts resulting from the partitioning 51, the number of texture maps in the second patch atlas 56 is less than the number of depth maps comprised in the second patch atlas 54.

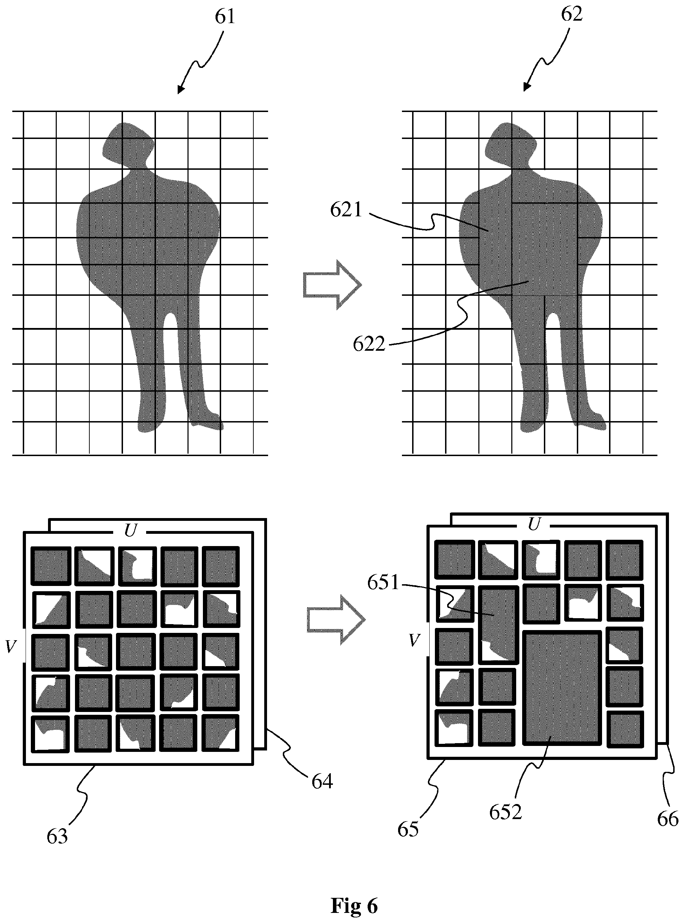

**Figure 6** shows further non-limiting examples of first or second patch atlas associated with 3D parts of the 3D representation (e.g. the point cloud) representing the object 5. Figure 6 shows a first partitioning 61 of the point cloud corresponding for example to the partitioning 51 of figure 5 and a second partitioning 62 of the same point cloud. A first patch atlas 63 is generated from the first partitioning 61, the first patch atlas 63 comprising the depth maps obtained from the 2D parametrizations associated with the 3D parts resulting from the partitioning 61. A second patch atlas 64 is generated from the first partitioning 61, the second patch atlas 64 comprising the texture maps obtained from the 2D parametrizations associated with the 3D parts resulting from the partitioning 61.

The second partitioning 62 is different from the first partitioning 61 in the sense that some of the 3D parts of the first partitioning 61 have been grouped into a single 3D part of the second partitioning 62. For example, 6 3D parts of the first partitioning 61 representing the torso of the person have been grouped to form one 3D part 622 in the second partitioning 62. In a same way, 4 3D parts of the first partitioning 61 representing part of the shoulder and arm of the person have been grouped to form one 3D part 621 in the second partitioning 62. The 3D parts are for example grouped according to the geometrical characteristics associated with the points of the point cloud comprised in the 3D parts. For example, 3D parts may be grouped together when the implicit surface obtained from the points comprised in each of these 3D parts have a similar topology, e.g. normal close to each other and/or range of associated depth value close to each other.

A first patch atlas 65 is generated from the second partitioning 62, the first patch atlas 65 comprising the depth maps obtained from the 2D parametrizations associated with the 3D parts resulting from the second partitioning 62. As illustrated on Figure 6, the shape and number of depth maps in the first patch atlas 65 is different from the shape and number of depth maps in the first patch atlas 63. Some of the depth maps 651, 652 associated with the 2D parametrizations of the 3D parts 621, 622 are different in size in comparison to the corresponding depth maps in the first patch atlas 63. In a same way, a second patch atlas 66 is generated from the second partitioning 62, the second patch atlas 66 comprising the texture maps obtained from the 2D parametrizations associated with the 3D parts resulting from the second partitioning 62. The number of color maps in the second patch atlas 66 is less than the number of color maps in the second patch atlas 64 following the grouping of 3D parts of the first partitioning 61 to obtain the second partitioning 62. This grouping allows to reduce the number of patches, and therefore the number of sharp frontiers and high spatial frequency information. Reducing this lowers the compression bit rate of the texture and depth maps.

According to a further example, a single 2D parametrization may be associated with the whole object 5, a single depth map and a single texture map may be generated for the whole object 5.

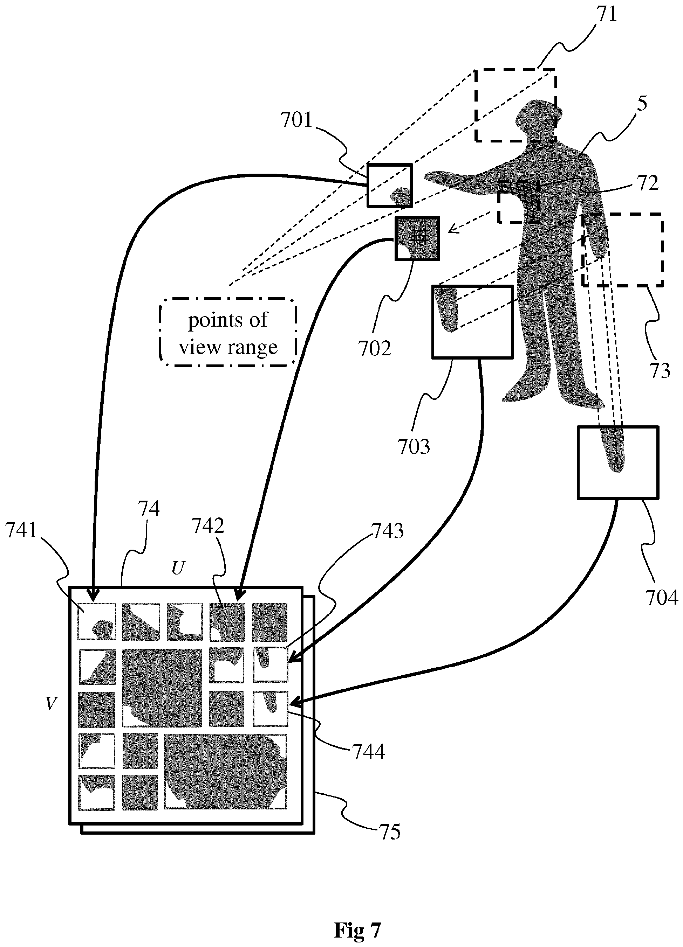

**Figure 7** illustrates the generation of first and second patch atlas from 3D parts of a point cloud representing the object 5, according to a non-limiting example of the present principles.

The point cloud representing the object 5 is partitioned into a plurality of 3D parts, e.g. 50, 100, 1000 or more 3D parts, 3 of them being illustrated on Figure 7, i.e. the 3D parts 71, 72 and 73, the 3D part 71 comprising points of the point cloud representing part of the head of the person, the 3D part 72 comprising points of the point cloud representing an armpit of the person and the 3D part 73 comprising points of the point cloud representing a hand of the person. One or more 2D parametrizations of each 3D part or of a part of the 3D parts are generated to represent each 3D part in two dimensions. For example, a 2D parametrization 701 is obtained for the 3D part 71, a 2D parametrization 702 is obtained for the 3D part 72 and 2 different 2D parametrizations 703 and 704 are obtained for the 3D part 73. The 2D parametrization may vary from a 3D part to another one. For example, the 2D parametrization 701 associated with the 3D part 71 is a linear perspective projection while the 2D parametrization 702 associated with the 3D part 72 is a LLE and the 2D parametrizations 703 and 704 associated with the 3D part 73 are both orthographic projections according to different points of view. All point of views used to obtain the 2D parametrizations are chosen to be located within the range of points of view of the acquisition device used to obtain the images of the object 5 and to obtain the associated point cloud. According to a variant, all 2D parametrizations associated with all 3D parts are of the same type, e.g. a linear perspective projection or an orthographic projection. According to a variant, different 2D parametrizations may be used for a same 3D part. A first patch atlas 74 collecting the depth maps associated with the obtained 2D parametrizations is generated as explained with regard to figures 5 and 6. The first patch atlas comprises a depth map 741 associated with the 2D parametrization 701, a depth map 742 associated with the 2D parametrization 702, a depth map 743 associated with the 2D parametrization 703 and a depth map 744 associated with the 2D parametrization 704, among other depth maps. A second patch atlas 75 collecting the texture maps associated with the obtained 2D parametrizations is generated as explained with regard to figures 5 and 6.

The choice of 2D parametrization for each 3D part is for example based on an optimization process, for example to reduce the number of maps in the first and second patch atlas, and/or to minimize the points of the 3D part which would be lost during the 3D to 2D transformation process.

Each depth or texture map has advantageously a rectangular shape to ease the packing process on the first patch atlas and the second patch atlas.

The depth maps and texture maps in respectively the first patch atlas and the second patch atlas will be separated by a border which will be discarded at the decoder side, to get rid of compression artefacts occurring at sharp visual frontiers. The exact part of information to retrieve for the depth and texture maps at decoder side for the regeneration of the point cloud, e.g. the depth/texture map's width and height, is provided by some of the 2D parametrization parameters, like for example the parameters giving the span in 2 dimensions of the projection surface expressed in pixel in the case of linear or orthographic perspective projection.

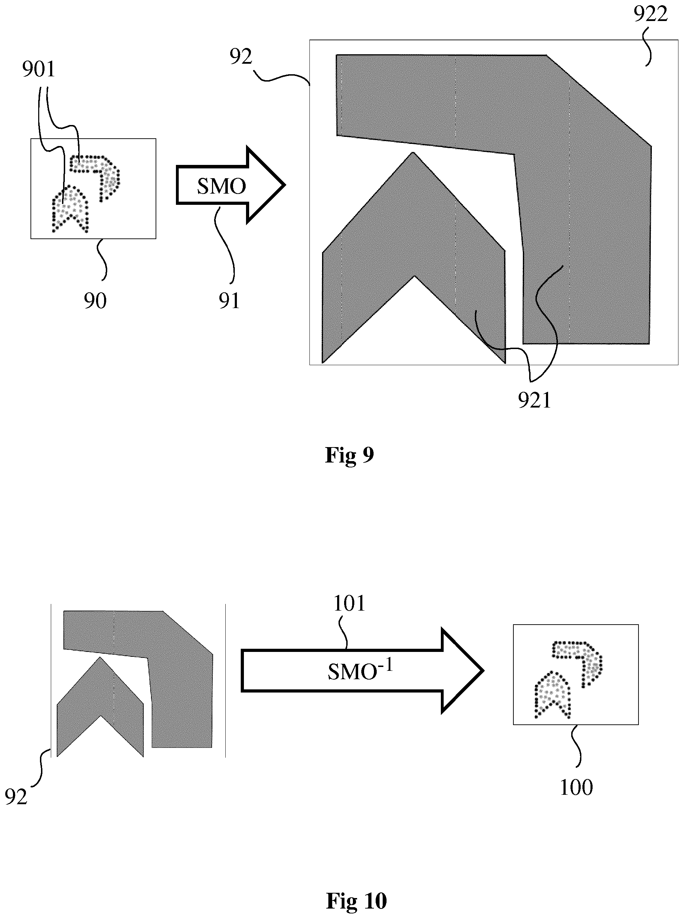

**Figures 9 and 10** show the adapting of the spatial sampling of a 2D parametrization associated with the 3D representation of the scene or with a part of the 3D representation, according to a non-restricting embodiment of the present principles.

**Figure 9** shows an example of a 2D parametrization 90 that corresponds for example to one of the 2D parametrizations 41, 42 or 43. The 2D parametrization comprises two regions of interest 901 that each corresponds to region of interest comprised in the part of the 3D representation of the scene corresponding to the 2D parametrization 90. The region(s) of interest of the 3D representation is for example determined by applying any object saliency detection method known from the skilled person in the art. When applied to a scene comprising one or more persons, the object saliency method may be a face detection method, considering that the face(s) of the person(s) are the objects of interest. The object saliency method may for example be applied to the images of the 3D scene acquired with the acquisition device of figures 2A and 2B. The spatial sampling of the 2D parametrization 90 may be adapted to assign more samples (e.g. pixels) to the areas of the 2D parametrization comprising the regions of interest 901 than to the other areas of the 2D parametrization. To reach that aim, a grid generation method (as, for example in "A Practical Guide to Direct Optimization for Planar Grid-Generation", J.E. CASTILLO, J.S. OTTO) may be used to adapt the sampling of the 2D parametrization 90 according to the regions or points of interest detected in the 2D parametrization. The grid generation algorithm may for example be described with a set of parameters, called for example sampling mapping operators SMO 91. By applying the SMO 91 to the 2D parametrization 90, an output 2D parametrization 92 is obtained. The space occupied by the representation of the region of interest 921 is greater in the output 2D parametrization 92 than the space occupied by the regions of interest 901 in the input 2D parametrization 90. Considering that the total number of samples (pixels) in both input and output 2D parametrizations 90, 92, the number of samples (pixels) assigned to the regions of interest is greater in the output 2D parametrization than in the input 2D parametrization, while the number of samples (pixels) assigned to the other areas (not comprising point of interest) 921 is less in the output 2D parametrization 92 than in the input 2D parametrization 90.

**Figure 10** shows the reconstruction of an image 100, which may correspond to the 2D parametrization 90, from the output 2D parametrization 92 and the sampling mapping operators SMO$^{-1}$ 101 that correspond to the inverse of the sampling mapping operators SMO 91. The data representative of the 2D parametrization 92 (i.e. the data associated with the samples/pixels forming the 2D parametrization, e.g. the data stored in the depth map or in the texture map associated with the 2D parametrization) may have been transmitted with the SMO 91 over a network, e.g. in a bitstream, to a decoder that is configured to decode and generate the data representative of the 2D parametrization 100.

An example of a method for generating sampling mapping operators is described in the patent application EP17305504.7 filed on May 04, 2017.

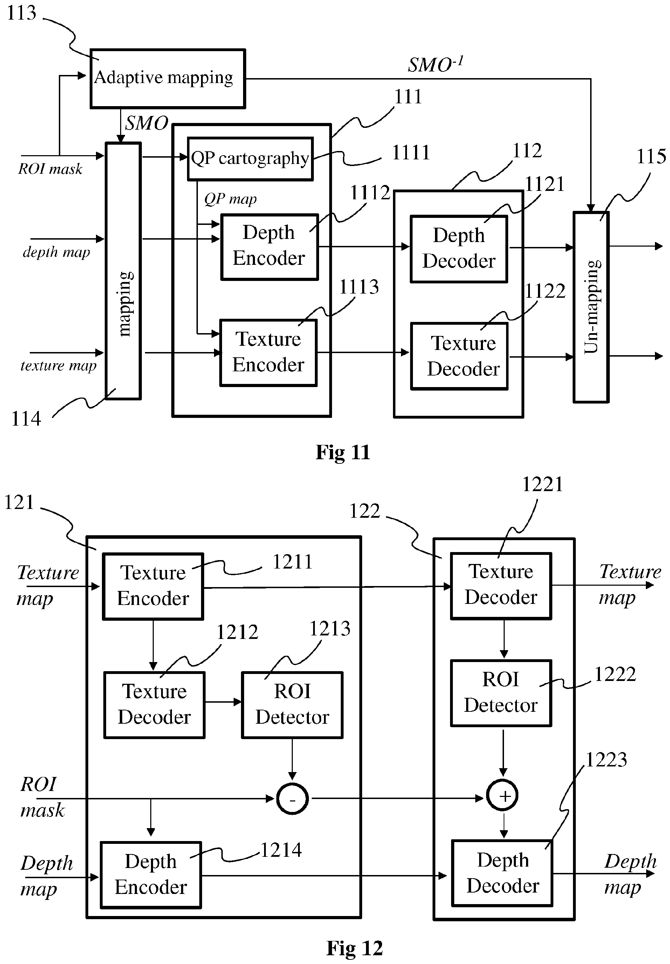

**Figure 11** shows a first scheme of encoding and decoding data representative of a 3D representation of a 3D scene, such as the 3D representation 30, 31 of figure 3, according to a non-restricting embodiment of the present principles. The following is described with regard to a single depth map and a single texture map associated with a single 2D parametrization. Naturally, the same processing applies to a plurality of 2D parametrizations and associated depth and texture maps.

Figure 11 shows an encoder 111 configured to encode the depth and texture maps into a bitstream and a decoder 112 configured to decode the depth and texture maps from the bitstream obtained with the encoder 111. The encoder 111 is adapted to determine which quantization steps may be used when encoding the blocks of the depth map and of the texture map. The quantization steps may be determined, for example in a module 1111, from a saliency map that comprises the location of the region(s) of interest (ROI) within the part of the 3D representation used to obtain the associated depth and texture maps. The saliency map is for example obtained by projecting the mask of ROI obtained from the considered part of the 3D representation onto the 2D parametrization associated with the depth and texture maps. A QP map (Quantization Parameters map) may be derived from the saliency map, the QP map indicating for example which quantization step value is to be used for encoding each block (of the depth and texture map). For example, a first quantization parameter value (e.g. a small value, close to 0) may be used for blocks of pixels belonging to the areas of the 2D parametrization (or equivalently to the areas of the depth and texture maps) comprising a ROI; and a second quantization parameter value (greater than the first quantization parameter value) may be used for blocks of pixels belonging to the areas of the 2D parametrization (or equivalently to the areas of the depth and texture maps) not comprising a ROI. Coding the ROI with a small quantization parameter enables to obtain a better accuracy and quality when reconstructing the 3D representation from the encoded bitstream.

The quantization parameter may be used to define the quantization step (QS), for example according to the following law:

$$QS = K.2^{QP/6}$$

with K a parameter depending on the size of the block of pixels, QP may vary between 0 and 51.

The depth encoder 1112 encodes the depth map according to the QP map obtained from the module 1111, i.e. by using the quantization parameters associated with the blocks of pixels of the depth map comprised in the ROI and the quantization parameters associated with the blocks of pixels of the depth map comprised in areas not comprising a ROI. The data of the depth map is for example encoded in a first syntax element of the bitstream according to a determined format, for example according to H.264/MPEG-4 AVC: *"Advanced video coding for generic audiovisual Services",* SERIES H: AUDIOVISUAL AND MULTIMEDIA SYSTEMS, Recommendation ITU-T H.264, Telecommunication Standardization Sector of ITU, February 2014 or according to HEVC/H265: "ITU-T H.265 TELECOMMUNICATION STANDARDIZATION SECTOR OF ITU (10/2014), SERIES H: AUDIOVISUAL AND MULTIMEDIA SYSTEMS, Infrastructure of audiovisual services - Coding of moving video, High efficiency video coding, Recommendation ITU-T H.265". The information regarding the different quantization parameters used to encode the different blocks of pixels (e.g. QP equal to 0 in a ROI and QP equal to 12 for the other blocks of pixels) is encoded into the bitstream with the encoded data of the depth map.

The texture encoder 1113 encodes the texture map according to the QP map obtained from the module 1111, i.e. by using the quantization parameters associated with the blocks of pixels of the texture map comprised in the ROI and the quantization parameters associated with the blocks of pixels of the texture map comprised in areas not comprising a ROI. The data of the texture map is for example encoded in a second syntax element of the bitstream according to a determined format, for example according to H.264/MPEG-4 AVC: *"Advanced video coding for generic audiovisual Services",* SERIES H: AUDIOVISUAL AND MULTIMEDIA SYSTEMS, Recommendation ITU-T H.264, Telecommunication Standardization Sector of ITU, February 2014 or according to HEVC/H265: "ITU-T H.265 TELECOMMUNICATION STANDARDIZATION SECTOR OF ITU (10/2014), SERIES H: AUDIOVISUAL AND MULTIMEDIA SYSTEMS, Infrastructure of audiovisual services - Coding of moving video, High efficiency video coding, Recommendation ITU-T H.265". The information regarding the different quantization parameters used to encode the different blocks of pixels (e.g. QP equal to 0 in a ROI and QP equal to 25 for the other blocks of pixels) is encoded into the bitstream with the encoded data of the texture map.

According to a variant, the QP map is encoded in a third syntax element of the bitstream. According to this variant, the information regarding the different quantization parameters used to encode the different blocks of pixels of the depth and texture maps is not encoded in the first and second syntax element as this information will be retrieved by the decoder 112 from the third syntax element.

According to another optional variant, the sampling grid of the depth and texture maps is adapted/mapped to the ROI (as described with regard to figures 9 and 10) in a module 114 using the SMO obtained by the module 113 from the ROI mask. According to this variant, the modules 113 and 114 may be functional modules integrated into the encoder 111. According to this variant, the QP cartography is also adapted/mapped to the sampling of the depth and texture maps, before being transmitted to the depth and texture encoders.

A bitstream comprising the first, second and third syntax element is generated. The bitstream further comprises the one or more parameters representative of the 2D parametrization (used to obtain the depth and texture maps from the 3D representation of the scene) and information representative of the mapping between the 2D parametrization and the depth and texture maps.

The obtained bitstream may be transmitted over a network (e.g. a LAN (Local Area Network) or WLAN (Wireless Local Area Network) and/or via the Internet network), e.g. to the decoder 112.

The decoder 112 comprises a depth decoder 1121 adapted to decode the depth data encoded into the first syntax element, and a texture decoder 1122 adapted to decode the texture data encoded into the second syntax element. The blocks of pixels of the depth and texture maps are decoded using the quantization parameters associated with each of these blocks (e.g. QP equal to 0 for the blocks of pixels comprised in a ROI and QP equal 12 for the other blocks of pixels). The decoders 1121 and 1122 are for example compliant with H.264/MPEG-4 AVC: *"Advanced video coding for generic audiovisual Services",* SERIES H: AUDIOVISUAL AND MULTIMEDIA SYSTEMS, Recommendation ITU-T H.264, Telecommunication Standardization Sector of ITU, February 2014 or according to HEVC/H265: "ITU-T H.265 TELECOMMUNICATION STANDARDIZATION SECTOR OF ITU (10/2014), SERIES H: AUDIOVISUAL AND MULTIMEDIA SYSTEMS, Infrastructure of audiovisual services - Coding of moving video, High efficiency video coding, Recommendation ITU-T H.265".

When the sampling grid of the depth and texture maps has been adapted according to the ROI mask, the inverse sampling operators SMO-1 are decoded from the bitstream and applied to the decoded depth and texture maps, e.g. in a module 115 that may be integrated in the decoder 112 or not, to reconstruct the 3D representation of the scene.

**Figure 12** shows a second scheme of encoding and decoding data representative of a 3D representation of a 3D scene, such as the 3D representation 30, 31 of figure 3, according to a non-restricting embodiment of the present principles. The following is described with regard to a single depth map and a single texture map associated with a single 2D parametrization. Naturally, the same processing applies to a plurality of 2D parametrizations and associated depth and texture maps.

Figure 12 shows an encoder 121 configured to encode the depth and texture maps into a bitstream and a decoder 122 configured to decode the depth and texture maps from the bitstream obtained with the encoder 121. The encoder 121 comprises a texture encoder 1211 adapted to encode the texture map. The data of the texture map is for example encoded in a second syntax element of the bitstream according to a determined format, for example according to H.264/MPEG-4 AVC: *"Advanced video coding for generic audiovisual Services",* SERIES H: AUDIOVISUAL AND MULTIMEDIA SYSTEMS, Recommendation ITU-T H.264, Telecommunication Standardization Sector of ITU, February 2014 or according to HEVC/H265: "ITU-T H.265 TELECOMMUNICATION STANDARDIZATION SECTOR OF ITU (10/2014), SERIES H: AUDIOVISUAL AND MULTIMEDIA SYSTEMS, Infrastructure of audiovisual services - Coding of moving video, High efficiency video coding, Recommendation ITU-T H.265".

The encoded texture data is transmitted to a texture decoder 1212 comprised in the encoder 121, the texture decoder 1212 being the same as the texture decoder 1221 comprised in the decoder 122. The texture decoder 1212 is compliant with H.264/MPEG-4 AVC: *"Advanced video coding for generic audiovisual Services",* SERIES H: AUDIOVISUAL AND MULTIMEDIA SYSTEMS, Recommendation ITU-T H.264, Telecommunication Standardization Sector of ITU, February 2014 or according to HEVC/H265: "ITU-T H.265 TELECOMMUNICATION STANDARDIZATION SECTOR OF ITU (10/2014), SERIES H: AUDIOVISUAL AND MULTIMEDIA SYSTEMS, Infrastructure of audiovisual services - Coding of moving video, High efficiency video coding, Recommendation ITU-T H.265". The texture decoder 1212 decodes the texture data encoded with the encoder 1211 into the second syntax element. A ROI detector 1213 is implemented to process the texture data decoded by the texture decoder 1212 to detect the location of the region(s) of interest within the decoded texture map, a decoded version of the ROI mask being for example generated. The decoded version of the ROI mask is compared with the ROI mask generated from the texture map (before encoding) to obtain the prediction error of the ROI mask. The prediction error of the ROI mask is for example encoded into a third syntax element of the bitstream.

The encoder 121 further comprises a depth encoder 1214 adapted to encode the data of the depth map according to the ROI mask, i.e. by encoding with different quantization parameters the different blocks of pixel, depending on whether the blocks of pixels belong to ROI. The depth map is encoded into a first syntax element of the bitstream. The first syntax element only comprises the encoded data representative of the encoded depth map with no information regarding the quantization steps used to encode the data.

A bitstream comprising the first, second and third syntax element is generated. The bitstream further comprises the one or more parameters representative of the 2D parametrization (used to obtain the depth and texture maps from the 3D representation of the scene) and information representative of the mapping between the 2D parametrization and the depth and texture maps.

The obtained bitstream may be transmitted over a network (e.g. a LAN (Local Area Network) or WLAN (Wireless Local Area Network) and/or via the Internet network), e.g. to the decoder 122.

The decoder 122 comprises a decoder 1221 adapted to decode the texture data encoded into the second syntax element, and a depth decoder 1223 adapted to decode the depth data encoded into the first syntax element. The blocks of pixels of the depth map are decoded using the quantization parameters that are obtained from the prediction error encoded into the third syntax element combined with a ROI mask obtained from a ROI detector 1222 applied on the decoded texture map. The decoders 1221 and 1222 are for example compliant with H.264/MPEG-4 AVC: *"Advanced video coding for generic audiovisual Services",* SERIES H: AUDIOVISUAL AND MULTIMEDIA SYSTEMS, Recommendation ITU-T H.264, Telecommunication Standardization Sector of ITU, February 2014 or according to HEVC/H265: "ITU-T H.265 TELECOMMUNICATION STANDARDIZATION SECTOR OF ITU (10/2014), SERIES H: AUDIOVISUAL AND MULTIMEDIA SYSTEMS, Infrastructure of audiovisual services - Coding of moving video, High efficiency video coding, Recommendation ITU-T H.265".

The encoding/decoding scheme of figure 12 enables to optimize, i.e. reduce, the amount of data describing the quantization parameters to be transmitted in the bitstream. Only the prediction error is encoded and transported within the bitstream.

The second scheme has been describing based on the example of a ROI detector applied on texture data decoded by a texture decoder, the prediction error of the ROI mask being used to decode the depth data. The same scheme may be applied by applying the ROI detector to depth data decoded by a depth decoder, the prediction error of the ROI mask being used to decode the texture data.

According to an optional variant, the texture encoder 1211 encodes the texture data according to the ROI mask, i.e. according to quantization parameters that vary according to whether the blocks of pixels of the texture map belong to a ROI. According to this variant, the quantization parameters may be encoded with the texture data to enable the texture decoder 1221 to decode accordingly the encoded texture data.

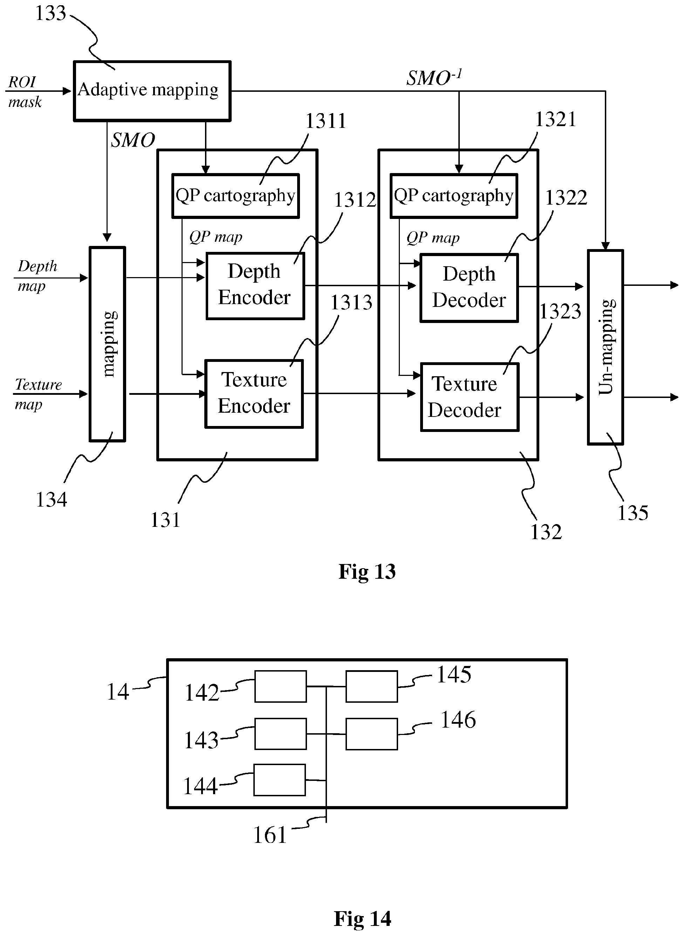

**Figure 13** shows a third scheme of encoding and decoding data representative of a 3D representation of a 3D scene, such as the 3D representation 30, 31 of figure 3, according to a non-restricting embodiment of the present principles. The following is described with regard to a single depth map and a single texture map associated with a single 2D parametrization. Naturally, the same processing applies to a plurality of 2D parametrizations and associated depth and texture maps.

Figure 13 shows an encoder 131 configured to encode the depth and texture maps into a bitstream and a decoder 132 configured to decode the depth and texture maps from the bitstream obtained with the encoder 131. The depth and texture maps are first encoded according to SMO to adapt 133 the sampling grid to a ROI mask. The encoder 131 comprises a module 1311 adapted to determine which quantization parameters may be used to encode the blocks of the depth map and of the texture map. The quantization parameters may be determined from the SMO that have been used to adapt the sampling grid of the depth and texture maps according to the ROI. For example, when it is determined from the SMO that the sampling grid is denser in an area of the depth map or the texture map, it may be deduced that this area corresponds to a ROI. Conversely, when it is determined from the SMO that the sampling level is standard or coarse, it may be deduced that this area corresponds to an area of the depth map or the texture map that does not comprise any ROI. A QP map may then be obtained from a module 1311 from the parameters SMO representative of the adaptive sampling applied to the depth and texture maps. The QP map indicates for example which quantization step value is to be used for encoding each block (of the depth and texture map). For example, a first quantization parameter value (e.g. a small value, close to 0) may be used for blocks of pixels belonging to the areas of the 2D parametrization (or equivalently to the areas of the depth and texture maps) comprising a ROI; and a second quantization parameter value (greater than the first quantization parameter value) may be used for blocks of pixels belonging to the areas of the 2D parametrization (or equivalently to the areas of the depth and texture maps) not comprising a ROI. For example, the blocks of pixels comprised in a ROI may be coded with a QP equal to 0 while the blocks of pixels not comprised in a ROI may be coded with a QP equal to 12 for the depth and 25 for the texture. Coding the ROI with a small quantization parameter value enables to obtain a better accuracy and quality when reconstructing the 3D representation from the encoded bitstream.

The depth encoder 1312 encodes the depth map according to the QP map obtained from the module 1311, i.e. by using the quantization parameters associated with the blocks of pixels of the depth map comprised in the ROI and the quantization parameters associated with the blocks of pixels of the depth map comprised in areas not comprising a ROI. The data of the depth map is for example encoded in a first syntax element of the bitstream according to a determined format, for example according to H.264/MPEG-4 AVC: *"Advanced video coding for generic audiovisual Services",* SERIES H: AUDIOVISUAL AND MULTIMEDIA SYSTEMS, Recommendation ITU-T H.264, Telecommunication Standardization Sector of ITU, February 2014 or according to HEVC/H265: "ITU-T H.265 TELECOMMUNICATION STANDARDIZATION SECTOR OF ITU (10/2014), SERIES H: AUDIOVISUAL AND MULTIMEDIA SYSTEMS, Infrastructure of audiovisual services - Coding of moving video, High efficiency video coding, Recommendation ITU-T H.265".

The texture encoder 1313 encodes the texture map according to the QP map obtained from the module 1311, i.e. by using the quantization parameters associated with the blocks of pixels of the texture map comprised in the ROI and the quantization parameters associated with the blocks of pixels of the texture map comprised in areas not comprising a ROI. The data of the texture map is for example encoded in a second syntax element of the bitstream according to a determined format, for example according to H.264/MPEG-4 AVC: *"Advanced video coding for generic audiovisual Services",* SERIES H: AUDIOVISUAL AND MULTIMEDIA SYSTEMS, Recommendation ITU-T H.264, Telecommunication Standardization Sector of ITU, February 2014 or according to HEVC/H265: "ITU-T H.265 TELECOMMUNICATION STANDARDIZATION SECTOR OF ITU (10/2014), SERIES H: AUDIOVISUAL AND MULTIMEDIA SYSTEMS, Infrastructure of audiovisual services - Coding of moving video, High efficiency video coding, Recommendation ITU-T H.265".

A bitstream comprising the first and second syntax elements is generated. The bitstream further comprises a third syntax element comprising the parameters SMO representative of the adaptive sampling applied to the depth and texture maps. According to another example, the third syntax element comprises the inverse parameters SMO$^{-1}$, the parameters enabling to de-project the depth and texture maps that have been obtained with the adaptive sampling mapping. The bitstream further comprises the one or more parameters representative of the 2D parametrization (used to obtain the depth and texture maps from the 3D representation of the scene) and information representative of the mapping between the 2D parametrization and the depth and texture maps.

The obtained bitstream may be transmitted over a network (e.g. a LAN (Local Area Network) or WLAN (Wireless Local Area Network) and/or via the Internet network), e.g. to the decoder 132.

The decoder 132 comprises a depth decoder 1321 adapted to decode the depth data encoded into the first syntax element, and a texture decoder 1322 adapted to decode the texture data encoded into the second syntax element. The decoder 132 further comprises a module 1321 configured to generate a QP map from the parameters comprised in the third syntax element, the module 1321 being for example the same as the module 1311. The blocks of pixels of the depth and texture maps are decoded using the quantization parameters comprised in the QP map and associated with each of these blocks (e.g. QP equal to 0 for the blocks of pixels comprised in a ROI and QP equal to 12 and 25 for depth and texture, respectively, for the other blocks of pixels). The decoders 1321 and 1322 are for example compliant with H.264/MPEG-4 AVC: *"Advanced video coding for generic audiovisual Services",* SERIES H: AUDIOVISUAL AND MULTIMEDIA SYSTEMS, Recommendation ITU-T H.264, Telecommunication Standardization Sector of ITU, February 2014 or according to HEVC/H265: "ITU-T H.265 TELECOMMUNICATION STANDARDIZATION SECTOR OF ITU (10/2014), SERIES H: AUDIOVISUAL AND MULTIMEDIA SYSTEMS, Infrastructure of audiovisual services - Coding of moving video, High efficiency video coding, Recommendation ITU-T H.265".

The decoded depth and texture maps may then be un-mapped 135 using the un-mapping parameters SMO$^{-1}$ to generate a 3D representation of the scene associated with the depth and texture maps.

The third encoding/decoding scheme enables to reduce the amount of data to be encoded into the bitstream and transmitted with the bitstream Indeed, there is no need to encode additional information describing the variation of the quantization steps within the depth and texture maps as this information is derived from the parameters SMO or SMO$^{-1}$ describing the adaptive sampling mapping applied to the depth and texture maps.

The QP map may be obtained in many ways. For example, The QP map may be derived from the un-mapping adaptive sampling function in a simple way. For each coding block, it may be computed the average distance between neighboring points after un-mapping: the smaller the distance, the higher the sampling density, and therefore the higher the probability the block is comprised within the ROI (for which the sampling density onto the parametric surface has been increased). The encoder and the decoder only need a LUT (Look-Up Table) mapping the sampling density ranges to QP values to determine which Quantization Parameters is to be used for each sampling density. There is no need to transmit this table that may be stored in a memory of the encoder and of the decoder. According to a variant, the table is encoded into the bitstream and transmitted with the bitstream.

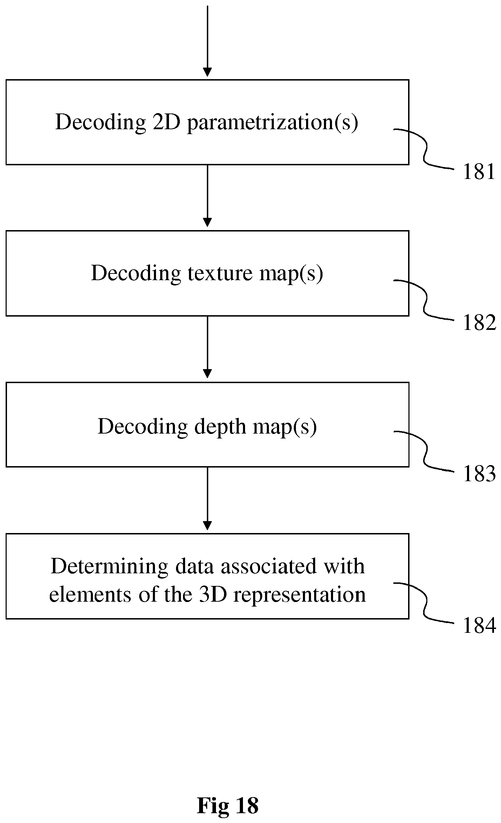

**Figure 14** shows an example architecture of a device 14 which may be configured to implement a method described in relation with figures 18 and/or 19. The device 14 may be configured to be an encoder 111, 121, 131 or a decoder 112, 122, 132 of figures 11, 12, 13.

The device 14 comprises following elements that are linked together by a data and address bus 141:

- a microprocessor 142 (or CPU), which is, for example, a DSP (or Digital Signal Processor);
- a ROM (or Read Only Memory) 143;
- a RAM (or Random-Access Memory) 144;
- a storage interface 145;
- an I/O interface 146 for reception of data to transmit, from an application; and
- a power supply, e.g. a battery.

In accordance with an example, the power supply is external to the device. In each of mentioned memory, the word « register » used in the specification may correspond to area of small capacity (some bits) or to very large area (e.g. a whole program or large amount of received or decoded data). The ROM 143 comprises at least a program and parameters. The ROM 143 may store algorithms and instructions to perform techniques in accordance with present principles. When switched on, the CPU 142 uploads the program in the RAM and executes the corresponding instructions.

The RAM 144 comprises, in a register, the program executed by the CPU 142 and uploaded after switch-on of the device 140, input data in a register, intermediate data in different states of the method in a register, and other variables used for the execution of the method in a register.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

In accordance with an example of encoding or an encoder 111, 121, 131, the three-dimension scene 10 is obtained from a source. For example, the source belongs to a set comprising:

- a local memory (143 or 144), e.g. a video memory or a RAM (or Random-Access Memory), a flash memory, a ROM (or Read Only Memory), a hard disk;
- a storage interface (145), e.g. an interface with a mass storage, a RAM, a flash memory, a ROM, an optical disc or a magnetic support;
- a communication interface (146), e.g. a wireline interface (for example a bus interface, a wide area network interface, a local area network interface) or a wireless interface (such as a IEEE 802.11 interface or a Bluetooth® interface); and
- a user interface such as a Graphical User Interface enabling a user to input data.

In accordance with examples of the decoding or decoder(s) 112, 122, 132, the stream is sent to a destination; specifically, the destination belongs to a set comprising:

- a local memory (143 or 144), e.g. a video memory or a RAM, a flash memory, a hard disk;
- a storage interface (145), e.g. an interface with a mass storage, a RAM, a flash memory, a ROM, an optical disc or a magnetic support; and
- a communication interface (146), e.g. a wireline interface (for example a bus interface (e.g. USB (or Universal Serial Bus)), a wide area network interface, a local area network interface, a HDMI (High Definition Multimedia Interface) interface) or a wireless interface (such as a IEEE 802.11 interface, WiFi ® or a Bluetooth ® interface).

In accordance with examples of encoding or encoder, a bitstream comprising data representative of the volumetric scene is sent to a destination. As an example, the bitstream is stored in a local or remote memory, e.g. a video memory or a RAM, a hard disk. In a variant, the bitstream is sent to a storage interface, e.g. an interface with a mass storage, a flash memory, ROM, an optical disc or a magnetic support and/or transmitted over a communication interface, e.g. an interface to a point to point link, a communication bus, a point to multipoint link or a broadcast network.

In accordance with examples of decoding or decoder or renderer, the bitstream is obtained from a source. Exemplarily, the bitstream is read from a local memory, e.g. a video memory, a RAM, a ROM, a flash memory or a hard disk. In a variant, the bitstream is received from a storage interface, e.g. an interface with a mass storage, a RAM, a ROM, a flash memory, an optical disc or a magnetic support and/or received from a communication interface, e.g. an interface to a point to point link, a bus, a point to multipoint link or a broadcast network.

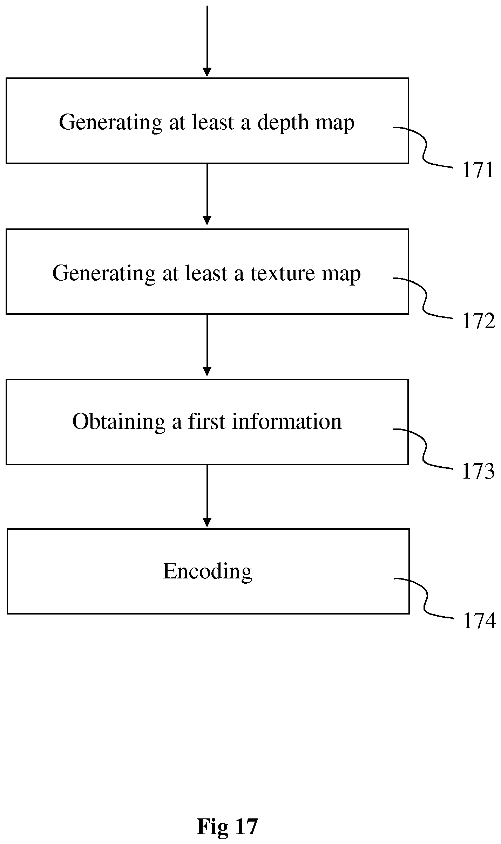

In accordance with examples, the device 14 is configured to implement a method described in relation with figures 17 and/or 18, and belongs to a set comprising:

- a mobile device;
- a communication device;
- a game device;
- a tablet (or tablet computer);
- a laptop;
- a still picture camera;
- a video camera;
- an encoding chip;

a server (e.g. a broadcast server, a video-on-demand server or a web server).

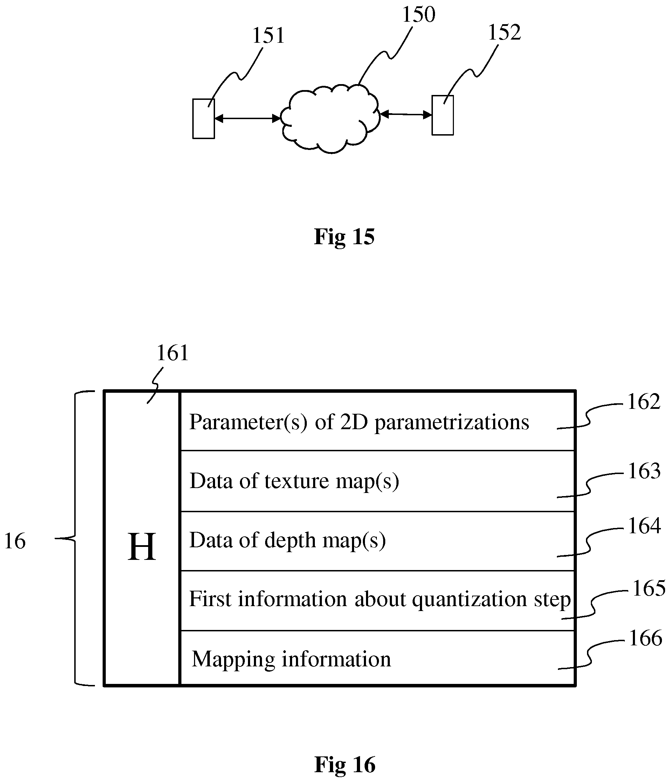

In accordance with an example illustrated in **Figure 15,** in a transmission context between two remote devices 151 and 152 (of the type of the apparatus 14) over a communication network NET 150, the device 151 comprises means which are configured to implement a method for encoding data as described in relation with the figures 11, 12, 13 and/or 17, and the device 152 comprises means which are configured to implement a decoding method as described in relation with figures 11, 12, 13 and/or 18.

In accordance with an example, the network 150 is a LAN or WLAN network, adapted to broadcast still pictures or video pictures with associated audio information from device 151 to decoding/rendering devices including the device 152.

In accordance with a further example, the network is a broadcast network adapted to broadcast encoded point cloud(s) from device 151 to decoding devices including the device 152.

A signal, intended to be transmitted by the device 151, carries the bitstreams 16.

**Figure 16** shows an example of an embodiment of the syntax of such a signal when the data are transmitted over a packet-based transmission protocol. Figure 16 shows an example structure 16 of a volumetric content stream. The structure consists in a container which organizes the stream in independent syntax elements.

The structure may comprise a header part 161 which is a set of data common to every syntax elements of the stream. For example, the header part contains metadata about syntax elements, describing the nature and the role of each of them.

The structure may comprise a payload comprising syntax elements 162 to 166. The first syntax element 162 is for example relative to the parameters defining the 2D parametrizations. The second syntax element 163 is for example relative to the data representative of the depth map(s). The third syntax element 164 is for example relative to the data representative of the texture map(s). The fourth syntax element 165 is for example relative to the information relative to the quantization parameters or quantization steps. The fifth syntax element 166 is for example relative to the information relative to the mapping between the 2D parametrizations and the corresponding depth and texture maps.

For illustration purpose, in the context of ISOBMFF file format standard, the texture map, depth map and the metadata would typically be referenced in ISOBMFF tracks in a box of type 'moov', with the texture map and depth map data themselves embedded in media-data box of type 'mdat'.

**Figure 17** illustrates a method for encoding data representative of a 3D representation of scene, for example the 3D scene 10, according to a non-restrictive embodiment of the present principles. The method may for example be implemented in the encoder 111, 121, 131 and/or in the device 14. The different parameters of the device 14 may be updated. The 3D representation may for example be obtained from a source, one or more points of view may be determined in the space of the 3D scene, parameters associated with projection mapping(s) may be initialized.

In a first operation 171, one or more depth maps are generated, each depth map being associated with a part of the 3D representation of the scene. The depth maps are each generated from parameter(s) of 2D parametrizations that are each associated with one part of the 3D representation and from geometrical information associated with the points comprised in the part of the 3D representation the 2D parametrization is associated with. Each depth map may for example correspond to a patch of a first patch atlas and is associated with one 2D parametrization of one part of the 3D representation. The 2D parametrization associated with a part of the 3D representation is a 2D pixel/sample representation of the 3D implicit surface obtained from the geometrical data associated with the points comprised in said part, the location of the 2D parametrization in the space of the scene and the point of view associated with the 2D parametrization being according to the pose information associated with the range of points of view from which the 3D representation is seen. The 2D parametrization is located in such a way to be between the surface of the scene represented by the 3D representation and the range of points of view, i.e. the 2D surface obtained with the 2D parametrization faces the part it is associated with. One or more 2D parametrizations are generated for each part or for each part of a part only of the 3D representation. According to a variant, a single 2D parametrization is generated for the whole 3D representation. When data is associated with pixels of depth maps, this data corresponds to distance or depth information.

In a second operation 172, one or more texture maps are generated, each texture map being associated with a part of the 3D representation of the scene. The texture map is generated from the parameters of the 2D parametrizations that are each associated with one part of the 3D representation and from texture/color information associated with the points comprised in the part of the 3D representation the 2D parametrization is associated with. Each texture map may for example correspond to a patch of a second patch atlas and is associated with one 2D parametrization of one part of the 3D representation. The data associated with the pixels of the texture maps may correspond to color (e.g., Red, Green, Blue or Cyan, Magenta, Yellow, Black) information.

In a third operation 173, a first information representative of the variation of the quantization step that is used to encode the depth maps, and/or the texture maps is obtained, for example retrieved from a storage device or determined as explained with regard to figures 11, 12 and/or 13. The quantization step may vary within the depth and/or texture maps according to region(s) of interest comprised in the corresponding part of the 3D representation.

In a fourth operation, the at least a depth map is encoded into a first syntax element of a bitstream; the at least a texture map is encoded into a second syntax element of the bitstream; the at least a parameter is encoded into a third syntax element; the first information is encoded into a fourth syntax element; and a second information representative of a mapping between the 2D parametrization(s) and corresponding depth map(s) and texture map(s) is encoded into a fifth syntax element of the bitstream.

**Figure 18** illustrates a method for decoding data representative of a 3D representation of a scene, for example the 3D scene 10, according to a non-restrictive embodiment of the present principles. The method may for example be implemented in the decoder 112, 122, 132 and/or in the device 14.

In a first operation 181, at least a parameter representative of at least a two-dimensional parametrization of at least a part of the 3D representation is decoded from a received bitstream.

In a second operation 182, the data representative of at least a texture map associated with the at least a part of the 3D representation is decoded from the bitstream.

In a third operation 183, the data representative of at least a depth map associated with the at least a part of the 3D representation is decoded from the bitstream.

In a fourth operation 174, the data associated with at least a point comprised in the at least a part of said 3D representation is determined from the at least a parameter, the data representative of the texture map(s), the data representative of the depth map(s), a first information obtained from the bitstream and representative of variation of quantization step within the depth and/or texture map(s), and a second information obtained from the bitstream and representative of a mapping between the 2D parametrization(s) and corresponding depth and texture maps.

Naturally, the present disclosure is not limited to the embodiments previously described.

In particular, the present disclosure is not limited to a method and device for encoding/decoding data representative of a 3D scene but also extends to a method for generating a bitstream comprising the encoded data and to any device implementing this method and notably any devices comprising at least one CPU and/or at least one GPU.

The present disclosure also relates to a method (and a device configured) for displaying images rendered from the decoded data of the bitstream.

The present disclosure also relates to a method (and a device configured) for transmitting and/or receiving the bitstream.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a postprocessor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method of encoding data representative of a 3D representation of a scene into a bitstream, said 3D representation being according to a range of points of view, the method comprising:

   - generating at least a depth map associated with at least a part of said 3D representation according to at least one parameter representative of at least a two-dimensional parametrization associated with said at least a part and data associated with at least a point comprised in said at least a part, said at least a two-dimensional parametrization being responsive to geometric information associated with said at least a point and to pose information associated with said range of points of view;
   - generating at least a texture map associated with said at least a part according to said at least a parameter and data associated with the at least a point comprised in said at least a part;
   - obtaining a first information representative of variation of quantization parameter within said at least a depth map and/or said at least a texture map according to a region of interest of said 3D representation;
   - encoding said at least a depth map into a first syntax element of said bitstream, said at least a texture map into a second syntax element of said bitstream, said at least a parameter into a third syntax element of said bitstream, said first information into a fourth syntax element of said bitstream and a second information representative of a mapping between said at least a two-dimensional parametrization and corresponding at least a depth map and at least a texture map into a fifth syntax element of said bitstream.

2. A device configured to encode data representative of a 3D representation of a scene into a bitstream, said 3D representation being according to a range of points of view, the device comprising a memory associated with at least one processor configured to:

   - generate at least a depth map associated with at least a part of said 3D representation according to at least one parameter representative of at least a two-dimensional parametrization associated with said at least a part and data associated with said at least a point comprised in said at least a part, said at least a two-dimensional parametrization being responsive to geometric information associated with said at least a point and to pose information associated with said range of points of view;
   - generate at least a texture map associated with said at least a part according to said at least a parameter and data associated with the at least a point comprised in said at least a part;
   - obtain a first information representative of variation of quantization parameter within said at least a depth map and/or said at least a texture map according to a region of interest of said 3D representation;
   - encode said at least a depth map into a first syntax element of said bitstream, said at least a texture map into a second syntax element of said bitstream, said at least a parameter into a third syntax element of said bitstream, said first information into a fourth syntax element of said bitstream and a second information representative of a mapping between said at least a two-dimensional parametrization and corresponding at least a depth map and at least a texture map into a fifth syntax element of said bitstream.

3. The method according to claim 1 or the device according to claim 2, wherein said at least a depth map and/or said at least a texture map are encoded according to said first information.

4. The method according to claim 1 or the device according to claim 2, wherein said first information corresponds to a prediction error associated with said at least a region of interest.

5. The method according to one of claims 1 and 3 or the device according to one of claims 2 to 3, wherein said first information corresponds to an information representative of sampling of said at least a 2D parametrization, a first sampling level being applied to at least an area of said 2D parametrization associated with said at least a region of interest and a second sampling level being applied to other areas of said 2D parametrization.

6. A stream carrying data representative of a 3D representation of a scene, said 3D representation being according to a range of points of view, wherein the data comprises:

   - at least a parameter representative of at least a two-dimensional parametrization of at least a part of part of said 3D representation, the parameters being obtained according to geometric information associated with at least a point of said at least a part and according to pose information associated with said range of points of view;
   - data representative of at least a texture map associated with said at least a part and determined from said at least a parameter and data associated with the at least a point comprised in said at least a part;

- data representative of at least a depth map associated with said at least a part of said 3D representation and determined from said at least a parameter and data associated with the at least a point comprised in said at least a part;

- a first information representative of variation of quantization parameter within said at least a depth map and/or said at least a texture map according to a region of interest of said 3D representation; and

- a second information representative of a mapping between said at least a two-dimensional parametrization and corresponding at least a depth map and at least a texture map.

7. The stream according to claim 6, wherein the data representative of said at least a depth map and/or said at least a texture map is encoded according to said first information.

8. The stream according to claim 6, wherein said first information corresponds to a prediction error associated with said at least a region of interest.

9. The stream according to claim 6 or 7, wherein said first information corresponds to an information representative of sampling of said at least a 2D parametrization, a first sampling level being applied to at least an area of said 2D parametrization associated with said at least a region of interest and a second sampling level being applied to other areas of said 2D parametrization.

10. A method of decoding data representative of a 3D representation of a scene from a bitstream, said 3D representation being according to a range of points of view, the method comprising:

    - decoding, from said bitstream, at least a parameter representative of at least a two-dimensional parametrization of at least a part of said 3D representation;
    - decoding, from said bitstream, data representative of at least a texture map associated with said at least a part of said 3D representation;
    - decoding, from said bitstream, data representative of at least a depth map associated with said at least a part of said 3D representation;
    - determining data associated with at least a point comprised in said at least a part of said 3D representation from said at least a parameter, said data representative of at least a texture map, said data representative of at least a depth map, a first information obtained from said bitstream and representative of variation of quantization parameter within said at least a depth map and/or said at least a texture map and a second information obtained from said bitstream and representative of a mapping between said at least a two-dimensional parametrization and corresponding at least a depth map and at least a texture map.

11. A device configured to decode data representative of a 3D representation of a scene from a bitstream, said 3D representation being according to a range of points of view, the device comprising a memory associated with at least one processor configured to:

    - decode, from said bitstream, at least a parameter representative of at least a two-dimensional parametrization of at least a part of said 3D representation;
    - decode, from said bitstream, data representative of at least a texture map associated with said at least a part of said 3D representation;
    - decode, from said bitstream, data representative of at least a depth map associated with said at least a part of said 3D representation;
    - determine data associated with at least a point comprised in said at least a part of said 3D representation from said at least a parameter, said data representative of at least a texture map, said data representative of at least a depth map, a first information obtained from said bitstream and representative of variation of quantization parameter within said at least a depth map and/or said at least a texture map and a second information obtained from said bitstream and representative of a mapping between said at least a two-dimensional parametrization and corresponding at least a depth map and at least a texture map.

12. The method according to claim 10 or the device according to claim 11, wherein said at least a depth map and/or said at least a color map are decoded according to said first information.

13. The method according to claim 10 or the device according to claim 11, wherein said first information corresponds to a prediction error associated with said at least a region of interest.

14. The method according to one of claims 10 and 12 or the device according to one of claims 11 to 12, wherein said first information corresponds to an information representative of sampling of said at least a 2D parametrization, a first sampling level being applied to at least an area of said 2D parametrization associated with said at least a region of interest and a second sampling level being applied to other areas of said 2D parametrization.

**15.** A non-transitory processor readable medium having stored therein instructions for causing a processor to perform at least the steps of the method according to claim 1 and/or at least the steps of the method according to claim 10.

**Fig 1**

**Fig 2A**

**Fig 2B**

30    31

**Fig 3**

40

43

41

42

4002    4003  4004

4001

401  402    403

**Fig 4**

**Fig 5**

**Fig 6**

**Fig 7**

81

**Fig 8A**

82

**Fig 8B**

83

**Fig 8C**

84

**Fig 8D**

901

92

922

SMO

90    91

921

**Fig 9**

101

SMO$^{-1}$

92

100

**Fig 10**

113

Adaptive mapping

*SMO⁻¹*

111

*SMO*

1111

QP cartography

*QP map*

ROI mask

112

1112

1121

Depth
Encoder

Depth
Decoder

depth map

mapping

1113

1122

texture map

Texture
Encoder

Texture
Decoder

115

Un-mapping

114

**Fig 11**

121

122

1221

*Texture
map*

Texture
Encoder

1211

Texture
Decoder

*Texture
map*

1212

1213

Texture
Decoder

ROI
Detector

ROI
Detector

1222

*ROI
mask*

−

+

1223

*Depth
map*

Depth
Encoder

1214

Depth
Decoder

*Depth
map*

**Fig 12**

**Fig 13**

**Fig 14**

151      150      152

**Fig 15**

161

| H | Parameter(s) of 2D parametrizations | 162 |
|---|---|---|
| | Data of texture map(s) | 163 |
| | Data of depth map(s) | 164 |
| | First information about quantization step | 165 |
| | Mapping information | 166 |

16

**Fig 16**

Generating at least a depth map

171

Generating at least a texture map

172

Obtaining a first information

173

Encoding

174

**Fig 17**

Decoding 2D parametrization(s)

181

Decoding texture map(s)

182

Decoding depth map(s)

183

Determining data associated with elements of the 3D representation

184

**Fig 18**

Europäisches
Patentamt

European
Patent Office

Office européen
des brevets

# EUROPEAN SEARCH REPORT

Application Number

EP 17 30 6538

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AINALA KHARTIK ET AL: "An improved enhancement layer for octree based point cloud compression with plane projection approximation", SPIE DEFENSE AND SECURITY SYMPOSIUM; 16-20 MARCH 2008; ORLANDO, FLORIDA, UNITED STATES, SPIE, US, vol. 9971, 27 September 2016 (2016-09-27), pages 99710R-99710R, XP060078033, ISSN: 0277-786X, DOI: 10.1117/12.2237753 ISBN: 978-1-5106-1723-0 * Chapters 1-4 * | 1-15 | INV. H04N19/597 |
| X | Ruwen Schnabel: "Efficient Point-Cloud Processing with Primitive Shapes", Dissertation, 1 December 2009 (2009-12-01), pages i-xviii, 1-154, XP055478271, Retrieved from the Internet: URL:http://hss.ulb.uni-bonn.de/2010/2319/2319a.pdf [retrieved on 2018-05-24] * abstract * * Chapters 1, 2.2, 3 * | 1,2,6, 10,11,15 | |
| A,D | J.E. CASTILLO ET AL: "A practical guide to direct optimization for planar grid-generation", COMPUTERS & MATHEMATICS WITH APPLICATIONS, vol. 37, no. 9, 1 May 1999 (1999-05-01), pages 123-156, XP055408695, AMSTERDAM, NL ISSN: 0898-1221, DOI: 10.1016/S0898-1221(99)00118-2 * the whole document * | 1-15 | |

TECHNICAL FIELDS SEARCHED (IPC)

H04N

-/--

The present search report has been drawn up for all claims

| Place of search | Date of completion of the search | Examiner |
|---|---|---|
| Munich | 8 June 2018 | Lindgren, Johan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches
Patentamt

European
Patent Office

Office européen
des brevets

## EUROPEAN SEARCH REPORT

Application Number

EP 17 30 6538

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PETER SCHEKKENS: "JPEG PLENO - Scope, use cases and requirements Ver.1.3", 71. JPEG MEETING;22-2-2016 - 26-2-2016; LA JOTTA; (JOINT PICTURE EXPERT GROUP OR ISO/IEC JTC1/SC29/WG1); URL: HTTPS://WWW.ISO.ORG,, no. wg1m71003, 14 December 2016 (2016-12-14), pages 1-18, XP030190032, * Chapter 5.2.2 * | 1-15 | |
| A | BIRENDRA KATHARIYA (UMKC) ET AL: "Plane Projection Approximation for Voxel Color Attributes Compression", 115. MPEG MEETING; 30-5-2016 - 3-6-2016; GENEVA; (MOTION PICTURE EXPERT GROUP OR ISO/IEC JTC1/SC29/WG11),, no. m38801, 28 May 2016 (2016-05-28), XP030067153, * the whole document * | 1-15 | |
| A | COHEN ROBERT A ET AL: "Point Cloud Attribute Compression Using 3-D Intra Prediction and Shape-Adaptive Transforms", 2016 DATA COMPRESSION CONFERENCE (DCC), IEEE, 30 March 2016 (2016-03-30), pages 141-150, XP033027696, DOI: 10.1109/DCC.2016.67 [retrieved on 2016-12-15] * the whole document * | 1-15 | TECHNICAL FIELDS SEARCHED (IPC) |

-/--

The present search report has been drawn up for all claims

| Place of search | Date of completion of the search | Examiner |
|---|---|---|
| Munich | 8 June 2018 | Lindgren, Johan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 3

Europäisches
Patentamt

European
Patent Office

Office européen
des brevets

**EUROPEAN SEARCH REPORT**

Application Number

EP 17 30 6538

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | COHEN ROBERT A ET AL: "Compression of 3-D point clouds using hierarchical patch fitting", 2017 IEEE INTERNATIONAL CONFERENCE ON IMAGE PROCESSING (ICIP), IEEE, 17 September 2017 (2017-09-17), pages 4033-4037, XP033323333, DOI: 10.1109/ICIP.2017.8297040 [retrieved on 2018-02-20] * abstract * ----- | 1-15 | |

TECHNICAL FIELDS
SEARCHED (IPC)

The present search report has been drawn up for all claims

| Place of search | Date of completion of the search | Examiner |
|---|---|---|
| Munich | 8 June 2018 | Lindgren, Johan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 17305504 A

**Non-patent literature cited in the description**

• **MATTHEW BERGER et al.** State of the Art in Surface Reconstruction from Point Clouds. *State of the Art Report,* 2014

• **J.E. CASTILLO ; J.S. OTTO.** *A Practical Guide to Direct Optimization for Planar Grid-Generation*